# EUROPEAN PATENT APPLICATION

(11) **EP 4 604 211 A1**
(43) Date of publication of application: **20.08.2025**
(21) Application number: 24883564.7
(22) Date of filing: 15.11.2024
(51) Int. Cl.: H01M 4/38, H01M 4/36, H01M 4/62, H01M 4/04

(54) **NEGATIVE ELECTRODE MATERIAL AND BATTERY**

(30) Priority: 13.12.2023 CN 202311720241; 29.03.2024 CN 202410388496
(71) Applicant: BTR New Material Group Co., Ltd., Shenzhen, Guangdong 518106 (CN); Shenzhen Dingyuan New Material Technology Co., Ltd., Shenzhen, Guangdong 518106 (CN)
(72) Inventor: HE, Peng, Shenzhen, Guangdong 518106 (CN); XIAO, Chengmao, Shenzhen, Guangdong 518106 (CN); REN, Jianguo, Shenzhen, Guangdong 518106 (CN); HE, Xueqin, Shenzhen, Guangdong 518106 (CN)
(74) Representative: Novagraaf Technologies
(86) International application number: PCT/CN2024/132425
(87) International publication number: WO 2025/124065

(57) **Abstract**

An anode material and a battery are provided. The anode material includes an active substance. The active substance includes a carbon matrix and a silicon material. The anode material contains an oxygen element and a nitrogen element, a mass content of the oxygen element is A%, and a mass content of the nitrogen element is B%. A powder conductivity of the anode material is P S/m, and meets the following relationship: (A+B)/P ≤ 3. According to the anode material provided in the present disclosure, a gas production phenomenon of the anode material is reduced while maintaining high electron conductivity.

## Description

This application claims priority to Chinese Patent Application No. 2023117202419 filed on December 13, 2023 and Chinese Patent Application No. 2024103884968 filed on March 29, 2024, the disclosures of which are hereby incorporated by reference in their entireties.

### Technical Field

The present disclosure relates to the technical field of anode materials, and specifically to an anode material and a battery.

### Background

Lithium-ion batteries have the advantages of being large in energy density, long in cycle life, small in environmental pollution, free of memory effect, etc., and thus are widely applied to electric vehicles and consumer electronics. In recent years, the rapid development of electric vehicles and the growing demand for higher energy density lithium ion batteries have urged researchers to search for battery materials with higher energy density and better cycle performance. Cathode and anode materials are the cores of a battery, and determine the working efficiency of the battery. At present, commercial anode materials are graphite, of which capacity has been close to a theoretical upper limit, such that an amplitude further improved is limited. Therefore, there is an urgent need to develop a new generation of high energy density anode materials. A silicon-based anode material is commonly considered as the next generation of battery anode materials, and has the advantages of being high in capacity, rich in source, relatively safe, etc.

A silicon anode is commonly considered as the next generation of battery anode materials, and has the advantages of being high in capacity, rich in source, relatively safe, etc. However, the silicon anode has a violent volume expansion effect during cycling, leading to material pulverization and crushing, resulting in fast attenuation of the cycle performance of the material. The volume expansion of silicon is generally inhibited by means of silicon carbon combination. However, there is a gas production problem in a silicon carbon anode material during the manufacturing of an electrode plate, causing safety hazards, and thus limiting its application.

Therefore, how to reduce a gas production value of an anode material while improving the conductivity of the anode material is the problem urgently to be solved currently.

### Summary

The present disclosure provides an anode material and a battery, which are conducive to reducing a gas generation phenomenon of the anode material while maintaining high electron conductivity.

The present disclosure provides an anode material, including an active substance. The active substance includes a carbon matrix and a silicon material. The anode material contains an oxygen element and a nitrogen element, a mass content of the oxygen element is A%, and a mass content of the nitrogen element is B%. A powder conductivity of the anode material is P S/m, and meets the following relationship: (A+B)/P≤3.

The technical solutions of the present disclosure have at least the following beneficial effects.

In the anode material provided in the present disclosure, the anode material includes the active substance, and the active substance includes the carbon matrix and the silicon material, facilitating the increasing of the capacity of the anode material. Further, the anode material contains small amounts of the oxygen element and the nitrogen element, the small amounts of the oxygen element and the nitrogen element may provide lone pair electrons, and the lone pair electrons participate in a π-π conjugated system of the carbon matrix, such that a larger p-π conjugated system is formed, thereby improving the electronic conductivity of the anode material. However, due to the presence of the oxygen element and the nitrogen element, the anode material easily reacts with solvent molecules or hydrogen radicals in electrolyte to produce some gases (e.g., CO₂, CO, NH₂, etc.), and a gas production phenomenon affects the safety performance of a battery. Therefore, in the present disclosure, by controlling (A+B)/P≤3 within the range, and controlling a relationship between the mass contents of the oxygen and nitrogen and the electronic conductivity of the anode material, the gas production phenomenon of the anode material is reduced while maintaining high electron conductivity.

### Brief Description of the Drawings

Fig. 1 is a process flowchart of a method for preparing an anode material according to the present disclosure.
Fig. 2 is an X-Ray Diffraction (XRD) diagram of an anode material prepared according Embodiment 1 of the present disclosure.
Fig. 3 is a schematic diagram of a first charging and discharging curve of an anode material prepared according Embodiment 1 of the present disclosure.
Fig. 4 is a schematic diagram of a cycling performance curve of an anode material prepared according Embodiment 1 of the present disclosure.
Fig. 5 is an XRD diagram of an anode material prepared according Embodiment 10 of the present disclosure.
Fig. 6 is a first charging and discharging curve of an anode material prepared according Embodiment 10 of the present disclosure.
Fig. 7 is a cycling performance curve of an anode material prepared according Embodiment 10 of the present disclosure.

### Detailed Description of the Embodiments

In order to better describe the present disclosure and to facilitate the understanding of the technical solutions of the present disclosure, the present disclosure is further described in detail below. However, the following embodiments are only simple examples of the present disclosure and do not represent or limit the scope of protection of the claims of the present disclosure, and the scope of protection of the present disclosure is subject to the claims.

In a first aspect, the present disclosure provides an anode material. The anode material includes an active substance. The active substance includes a carbon matrix and a silicon material. The anode material contains an oxygen element and a nitrogen element, a mass content of the oxygen element is A%, and a mass content of the nitrogen element is B%. A powder conductivity of the anode material is P S/m, and meets the following relationship: (A+B)/P≤3.

In the anode material provided in the present disclosure, the anode material includes the active substance, and the active substance includes the carbon matrix and the silicon material. The anode material contains the oxygen element and the nitrogen element, the oxygen element and the nitrogen element may provide lone pair electrons, and the lone pair electrons participate in a π-π conjugated system of the carbon matrix, such that a larger p-π conjugated system is formed, thereby improving the electronic conductivity of the anode material. However, due to the presence of the oxygen element and the nitrogen element, the anode material easily reacts with solvent molecules or hydrogen radicals in electrolyte to produce some gases (e.g., CO₂, CO, NH₂, etc.), and a gas production phenomenon affects the safety performance of a battery. Therefore, in the present disclosure, a relationship between the mass contents of the oxygen element and the nitrogen element and the electronic conductivity of the anode material meets the relationship: (A+B)/P≤3, which is conducive to reducing the gas production phenomenon of the anode material while maintaining high electron conductivity.

In some implementations, the silicon material includes silicon particles.

In some implementations, the silicon material includes the silicon particles and silicon oxide layers located on surfaces of the silicon particles. The silicon oxide layer includes a silicon oxide, and a general formula of the silicon oxide is SiOₓ, where 0.5≤x < 2. Specifically, the SiOₓ may be SiO_{0.5}, SiO_{0.7}, SiO_{0.9}, SiO, SiO_{1.2}, SiO_{1.5}, SiO_{1.8}, SiO_{1.9}, or the like, and is not limited herein.

In some implementations, the silicon material includes the silicon particles and the silicon oxide layers located on surfaces of the silicon particles, where based on the mass of a silicon material being 100%, a mass percentage content of oxygen element in the silicon material is 1%-18%. Specifically, the mass percentage content of oxygen element in the silicon material may be 1%, 2%, 3%, 4%, 5%, 6%, 7%, 8%, 9%, 10%, 11%, 12%, 13%, 14%, 15%, 16%, 17%, 18%, or the like, and is not limited herein. It is conducive to form stable silicon oxide layers on the surfaces of the silicon particles by controlling the mass percentage content of an oxygen element in the silicon material within the range, such that a direct contact between the silicon particles and electrolyte may be reduced so as to reduce side reactions between the silicon material and the electrolyte, thereby improving the cycling stability of the anode material. It may also ensure that the silicon material has stable activity, so as to increase the specific capacity of the anode material.

In some implementations, the silicon particles include at least one of elemental silicon, silicon oxides, silicon alloys, or silicon-carbon complexes. Specifically, the elemental silicon may be amorphous silicon, crystalline silicon, a complex of the crystalline silicon and the amorphous silicon, etc., and is not limited herein. The silicon alloy may be silicon lithium alloy, silicon magnesium alloy, silicon nickel alloy, or the like, and is not limited herein.

In some implementations, an average particle size of the silicon particles is 0.1 nm-500 nm, which may specifically be 1 nm, 5 nm, 10 nm, 50 nm, 100 nm, 150 nm, 200 nm, 300 nm, 350 nm, 400 nm, 500 nm, etc., or may definitely be other values within the above range, and is not limited herein. The silicon particles with an appropriate size can improve the distribution uniformity of the silicon particles and the carbon matrix, and silicon particle segregation may be reduced, thereby improving the cycling performance of the anode material. Preferably, the average particle size of the silicon particles is 1 nm-10 nm, and further preferably, the average particle size of the silicon particles is 1 nm-5 nm.

In some implementations, a mass content of silicon element in the silicon particles is ≥99%. The mass content of the silicon elements in the silicon particles is within the range, such that the purity of the silicon particles is improved, and impurities are reduced.

In some implementations, the morphology of the silicon particles includes at least one of a dot shape, a spherical shape, an ellipsoidal shape, and a flaky shape. The morphology of the silicon particles may be selected according to actual requirements, and is not limited herein.

In some implementations, the active substance includes the carbon matrix and the silicon particles. The carbon matrix has pores, and at least partial silicon particles are distributed in the pores of the carbon matrix.

In the anode material provided in the present disclosure, the anode material includes the active substance, the active substance includes the carbon matrix and the silicon particles, the carbon matrix has the pores, and at least partial silicon particles are distributed in the pores of the carbon matrix, such that the capacity of the anode material may be increased. Furthermore, the anode material contains the oxygen element and the nitrogen element, the doping of the oxygen element and the nitrogen element may provide lone pair electrons, and the lone pair electrons participate in a π-π conjugated system of the carbon matrix, such that a larger p-π conjugated system is formed, thereby improving the electronic conductivity of the anode material. However, due to the presence of the oxygen element and the nitrogen element, the anode material easily reacts with solvent molecules or hydrogen radicals in electrolyte to produce some gases (e.g., CO₂, CO, NH₂, etc.), and a gas production phenomenon affects the safety performance of a battery. Therefore, in the present disclosure, the mass contents of the oxygen element and the nitrogen element in the anode material and the electronic conductivity of the anode material meet (A+B)/P≤3. By controlling a relationship between the mass contents of the oxygen element and the nitrogen element and the electronic conductivity of the anode material, the gas production phenomenon of the anode material is reduced while maintaining high electron conductivity. The carbon matrix has the pores, and the distribution of the silicon particles in the pores of the carbon matrix facilitates the relieving of volume expansion of the silicon particles in the anode material during cycling, such that the structure stability of the anode material is maintained, and the collapse of a material structure caused by the volume expansion of the anode material during lithium intercalation/lithium deintercalation is reduced. The pores in the carbon matrix in the anode material can also adsorb a small amount of gas, such that the gas production phenomenon of the anode material can also be further reduced, thereby improving the cycling performance of the anode material.

In some implementations, in the anode material, the mass content of the oxygen element is A%, 0 < A≤3.

A value of A may specifically be 0.1, 0.2, 0.4, 0.5, 0.8, 1, 1.2, 1.5, 1.8, 2.0, 2.2, 2.5, 2.8, 3, or the like, and is not limited herein. Preferably, the mass content of the oxygen element is 0 < A%≤1.5%.

In some implementations, in the anode material, the mass content of the nitrogen element is B%, 0 < B≤ 3. A value of B may specifically be 0.1, 0.2, 0.4, 0.5, 0.8, 1, 1.2, 1.5, 1.8, 2.0, 2.2, 2.5, 2.8, 3, or the like, and is not limited herein. By controlling the content of the nitrogen element in the anode material within the range, the specific capacity of the anode material may be increased. Preferably, the mass content of the nitrogen element is 0.1%≤B%≤0.5%.

In some implementations, the carbon matrix includes at least one of hard carbon, soft carbon, graphite, mesocarbon microbeads, activated carbon, porous carbon, mesoporous carbon, or carbon gel.

In some implementations, the surface and/or pores of the carbon matrix have a functional group, and the functional group includes at least one of hydroxyl, carboxyl, carbonyl, an ester group, a cyclic lactone group, or amino.

In some implementations, the nitrogen element and the oxygen element are present on the surface and/or pores of the carbon matrix by means of atom doping, which may specifically in the pores and/or surface defects of the carbon matrix.

In some implementations, a total pore volume of the carbon matrix is ≥0.4 cm³/g, which may specifically be 0.4 cm³/g, 0.5 cm³/g, 0.8 cm³/g, 1 cm³/g, 1.1 cm³/g, 1.3 cm³/g, 1.5 cm³/g, 1.8 cm³/g, or the like, or may definitely be other values within the above range, and is not limited herein. Preferably, the total pore volume of the carbon matrix is ≥0.5 cm³/g, and further preferably, the total pore volume of the carbon matrix is ≥0.7 cm³/g.

In some implementations, the pores in the carbon matrix include micropores with a pore diameter less than 2 nm, and a proportion of the micropores is ≥80%. Specifically, the proportion of the micropores may be 80%, 82%, 85%, 88%, 90%, 92%, 93%, 95%, 98%, 99%, etc., and is not limited herein. It may be understood that, sizes of the silicon particles deposited in the pores of the carbon matrix are determined according to sizes of the pores. If the proportion of the micropores is higher, an average pore diameter of the pores of the carbon matrix is smaller, and the particle sizes of the silicon particles deposited in the pores of the carbon matrix are smaller. The particle sizes of the silicon particles deposited in the pores of the carbon matrix are small, and volume expansion of the anode material during cycling is small, such that the cycling performance of the anode material is improved. Preferably, the proportion of the micropores is ≥90%, and further preferably, the proportion of the micropores is ≥95%.

In some implementations, the average pore diameter of the pores in the carbon matrix is ≤5 nm, which may specifically be 0.1 nm, 0.5 nm, 1 nm, 1.5 nm, 2 nm, 2.5 nm, 3 nm, 3.5 nm, 4 nm, 4.5 nm, 5 nm, etc., or may definitely be other values within the above range, and is not limited herein. It may be understood that, the average pore diameter of the pores of the carbon matrix affects the particle sizes of the silicon particles located in the pores. By controlling the average pore diameter of the pores of the carbon matrix, the particle sizes of the silicon particles can be adjusted, thereby reducing an excessive expansion stress phenomenon formed by the accumulation of local silicon particles. Preferably, the average pore diameter of the pores of the carbon matrix is ≤2 nm, and more preferably, the average pore diameter of the pores of the carbon matrix is ≤1.8 nm.

In some implementations, a porosity of the carbon matrix is 40%-60%, may specifically be 40%, 41%, 43%, 45%, 48%, 50%, 52%, 54%, 56%, 58%, 60%, or the like, or may definitely be other values within the above range, which is not limited herein.

In some implementations, while stirring, 150 mL of an HF solution with a mass fraction of 20% is dropwise added to 10 g of the anode material to generate SiF₄ and a H₂ gas and release heat, until there is no gas generated, the supernatant acid solution is removed through centrifugation, then 150 mL of the HF solution with the mass fraction of 20% is added to the anode material again, stirring is performed for 12 h, then the supernatant acid solution is removed again through centrifugation, and then the anode material is washed with pure water to neutral and dried, so as to obtain the anode material with the silicon particles removed, which is the carbon matrix.

In some implementations, the anode material further includes a carbon material located on at least partial surface of the active substance. It may be understood that, the carbon material may reduce a volume expansion effect of the anode material to a certain extent as a buffer layer, and the conductivity of the anode material is improved at the same time. The carbon material may also reduce a direct contact between the active substance and electrolyte, so as to inhibit the overgrowth of an SEI film on the surface of the anode material, such that an interface of the anode material is stabilized, thereby improving the coulombic efficiency of the anode material.

In some implementations, the carbon material includes at least one of graphitic carbon or amorphous carbon. The presence of the carbon material on the surface of the active substance may improve the conductivity of the anode material, and can also stabilize the interface of the anode material, such that the direct contact between the silicon particles and the electrolyte is reduced, and the occurrence of side reactions is reduced, thereby improving the rate performance and cycling performance of the anode material.

In some implementations, a median particle size D₅₀ of the anode material is ≤10 µm, which may specifically be 0.5 µm, 1 µm, 2 µm, 3 µm, 4 µm, 5 µm, 6 µm, 7 µm, 8 µm, 9 µm, 10 µm, etc., or may definitely be other values within the above range, and is not limited herein. It may be understood that, by controlling the median particle size of the anode material within the above range, the cycling performance of the anode material is improved.

In some implementations, a specific surface area of the anode material is ≤5 m²/g, may specifically be 0.1 m²/g, 0.5 m²/g, 1 m²/g, 1.5 m²/g, 2 m²/g, 2.5 m²/g, 3 m²/g, 3.5 m²/g, 4 m²/g, 4.5 m²/g, 5 m²/g, or the like, or may definitely be other values within the above range, which is not limited herein. By controlling the specific surface area of the anode material within the above range, the initial coulombic efficiency and cycling performance of a lithium battery prepared by the anode material is improved.

In some implementations, a 6-day gas production amount of the anode material is M mL/g, where M≤0.2. The gas production amount of the anode material may specifically be 0.2 mL/g, 0.18 mL/g, 0.15 mL/g, 0.12 mL/g, 0.10 mL/g, 0.08 mL/g, 0.05 mL/g, 0.01 mL/g, or the like, or may definitely be other values within the above range, which is not limited herein. By controlling the gas production amount of the anode material within the range, the cycling stability and safety of the anode material may be improved.

A method for testing the gas production amount of the anode material includes: 20 g of the anode material is added to 50 g of a styrene butadiene rubber solution to obtain a mixed solution; the mixed solution is packaged by using an aluminum plastic film, placed in a 2000 mL sealed container, and preserved at 45 °C; and the 6-day gas production amount of the anode material is obtained as M mL/g through testing.

In some implementations, a powder conductivity of the anode material is P S/m, where P≥0.01 S/m. The powder conductivity may specifically be 0.01 S/m, 0.02 S/m, 0.03 S/m, 0.05 S/m, 0.08 S/m, 0.1 S/m, 0.2 S/m, 1 S/m, or the like, or may definitely be other values within the above range, which is not limited herein.

In some implementations, the anode material further contains a sulfur element, and a content of the sulfur element in the anode material is S ppm, where 0 < S≤20 ppm.

First, the anode material contains small amounts of the oxygen element and the nitrogen element, the small amounts of the oxygen element and the nitrogen element may provide lone pair electrons, and the lone pair electrons participate in a π-π conjugated system of the carbon matrix, such that a larger p-π conjugated system is formed, thereby improving the electronic conductivity of the anode material. However, due to the presence of the oxygen element and the nitrogen element, an electrode plate prepared by the anode material easily react with solvent molecules or hydrogen radicals in electrolyte to produce some gases (e.g., CO₂, CO, NH₂, etc.), and a gas production phenomenon affects the safety performance of the battery, such that the anode material is also doped with the sulfur element while nitrogen and oxygen are doped, and the content of the sulfur element in the anode material is 0 < S≤20 ppm. Since the sulfur element has a large atomic radius, and may form a C-S bond having lithium storage activity with a carbon element in the anode material, a spacing between carbon layers after the nitrogen and oxygen elements are doped may be further expanded, such that the conductivity of the carbon matrix is better. Meanwhile, the sulfur element may bond to the oxygen element to form an inactive S-O bond, so as to reduce the gas production problem caused by reactions between the electrode plate prepared by the anode material and the electrolyte is reduced. Furthermore, after the sulfur element is doped, a relationship among the content A% of the oxygen element, the content B% of the nitrogen element, and the powder conductivity P meets (A+B)/P≤3, such that the doping of the nitrogen, oxygen, and sulfur relieves the problem of increased gas production due to the reactions between the electrode plate prepared by the anode material and the electrolyte while improving the powder conductivity of the anode material, thereby promoting the anode material to have both excellent conductivity and cycling performance.

In some implementations, the sulfur content of the anode material is 0 < S≤20 ppm. Optionally, the sulfur content of the anode material may specifically be 20 ppm, 17 ppm, 14 ppm, 11 ppm, 9 ppm, 6 ppm, or the like, or may also be other values within the range, may be selected according to actual requirements, and is not limited herein. It may be understood that, the sulfur content of the anode material is within the range, such that the structure stability of the carbon matrix is not affected by excessive sulfur doping while the conductivity of the anode material is improved and a gas production value of the reactions between the electrode plate prepared by the anode material and the electrolyte is reduced.

In some implementations, the mass content A% of the oxygen element is ≤3%. Optionally, the mass content of the oxygen element may specifically be 3%, 2.5%, 2%, 1.5%, 1%, 0.5%, 0.3%, etc., or may be other values within the range, may be selected according to actual requirements, and is not limited herein. It may be understood that, the mass content of the oxygen element is within the range, such that a gas production amount of the reactions between the electrode plate prepared by the anode material during charging and discharging and the electrolyte may be reduced, thereby improving the cycling performance of the battery prepared by the anode material. Preferably, the mass content of the oxygen element is ≤1%, and more preferably, the mass content of the oxygen element is ≤0.5%.

In some implementations, the mass content B% of the nitrogen element is ≤3%. Optionally, the mass content of the nitrogen element may specifically be 3%, 2.5%, 2%, 1.5%, 1%, 0.5%, 0.3%, etc., or may be other values within the range, may be selected according to actual requirements, and is not limited herein. The mass content of the nitrogen element of the present disclosure is within the range, and the nitrogen doping content improves both the conductivity and electrocatalytic activity of the anode material. Preferably, the mass content of the nitrogen element is ≤1%, and more preferably, the mass content of the nitrogen element is ≤0.5%.

In some implementations, the powder conductivity P of the anode material is 10⁻¹ S/cm~10⁴ S/cm. Optionally, the powder conductivity of the anode material may specifically be 10⁻¹ S/cm, 10 S/cm, 10² S/cm, 10³ S/cm, 10⁴ S/cm, etc., or may be other values within the range, may be selected according to actual requirements, and is not limited herein. It may be understood that, the powder conductivity P of the anode material is within the range, such that the anode material may transmit lithium ions more efficiently, and during first charging and discharging of the battery prepared by the anode material, more lithium ions can participate in a reversible charging and discharging reaction, so as to reduce irreversible capacity losses, thereby improving the initial coulombic efficiency of the battery prepared by the anode material.

In some implementations, the pores in the anode material include micropores, which are pores with a pore diameter less than 2 nm. A volume proportion of the micropores of the anode material in the total pore volume of the anode material is ≤20%.

In some implementations, the volume proportion of the micropores of the anode material in the total pore volume of the anode material is ≤5%. Optionally, the volume proportion of the micropores in all pores may specifically be 5%, 4%, 3%, 2%, 1%, etc., or may be other values within the range, may be selected according to actual requirements, and is not limited herein. It may be understood that, the volume proportion of the micropores of the anode material is within the range, such that the specific surface area of the anode material can be enhanced, and more active sites are provided for the intercalation and deintercalation of the lithium ions, thereby increasing the reversible capacity of the anode material.

In some implementations, the pores in the anode material include mesopores, which pores with a pore diameter of 2 nm-50 nm. A volume proportion of the mesopores of the anode material in the total pore volume of the anode material is 87%-97%. Optionally, the volume proportion of the mesopores in the total pore volume of the anode material may specifically be 87%, 88%, 89%, 90%, 91%, 92%, 93%, 94%, 95%, 96%, 97%, etc., or may be other values within the range, may be selected according to actual requirements, and is not limited herein. It may be understood that, the volume proportion of the mesopores in the total pore volume of the anode material is within the range, facilitating rapid diffusion of the lithium ions, and an enough space can be provided to accommodate volume changes for the silicon particles during charging and discharging, such that the cycling stability of the anode material is improved.

In some implementations, the pores in the anode material include macropores, which pores with a pore diameter greater than 50 nm. A volume proportion of the macropores of the anode material in the total pore volume of the anode material is ≤10%. Optionally, the volume proportion of the macropores of the anode material in all the pores may specifically be 10%, 9%, 8%, 7%, 6%, 5%, 4%, 3%, 2%, 1%, etc., or may be other values within the range, may be selected according to actual requirements, and is not limited herein. It may be understood that, the volume proportion of the macropores of the anode material in the total pore volume of the anode material is within the range, such that a diffusion rate of the lithium ions may be accelerated.

In some implementations, an average pore diameter of the pores in the anode material is 0.5 nm-20 nm. Optionally, the average pore diameter of the pores in the anode material may specifically be 0.5 nm, 2 nm, 4 nm, 6 nm, 8 nm, 10 nm, 12 nm, 14 nm, 16 nm, 18 nm, 20 nm, or the like, or may also be other values within the range, may be selected according to actual requirements, and is not limited herein.

In some implementations, the total pore volume of the anode material is 0.001 cm³/g-0.1 cm³/g. Optionally, the total pore volume of the anode material may specifically be 0.001 cm³/g, 0.01 cm³/g, 0.02 cm³/g, 0.03 cm³/g, 0.04 cm³/g, 0.05 cm³/g, 0.06 cm³/g, 0.07 cm³/g, 0.08 cm³/g, 0.09 cm³/g, 0.1 cm³/g, or the like, or may also be other values within the range, may be selected according to actual requirements, and is not limited herein. It may be understood that, the total pore volume of the anode material is within the above range, such that the anode material also reserves appropriate pores to relieve volume expansion caused by the active substance during lithium deintercalation while the specific capacity of the anode material is increased, thereby improving the cycling performance of the anode material.

In some implementations, the pores of the anode material with the silicon particles removed include micropores, and a volume proportion of the micropores in the anode material with the silicon particles removed in the total pore volume of the anode material with the silicon particles removed is ≥80%. Optionally, the volume proportion of the micropores with the silicon particles removed in the total pore volume of the anode material with the silicon particles removed may specifically be 80%, 82%, 84%, 86%, 88%, 90%, 92%, 94%, 96%, 98%, etc., or may be other values within the range, may be selected according to actual requirements, and is not limited herein.

In some implementations, a method for preparing the anode material with the silicon particles removed includes: a 1 M nitric acid solution is added in the anode material for soaking for 1 h; then an HF solution with a 20% mass fraction is added dropwise to the anode material, yellow smoke is produced, and the acid solution is repeated added dropwise for a plurality of times, until there no yellow smoke produced in the solution; and finally, the 1 M nitric acid solution is used again to eliminate residue, and then washing and drying are performed to obtain the anode material with the silicon particles removed, which is the carbon matrix.

In some implementations, the method for preparing the anode material with the silicon particles removed includes: while stirring, 150 mL of an HF solution with a mass fraction of 20% is dropwise added to 10 g of the anode material to generate SiF₄ and a H₂ gas and release heat, until there is no gas generated, the supernatant acid solution is removed through centrifugation, then 150 mL of the HF solution with the mass fraction of 20% is added to the anode material again, stirring is performed for 12 h, then the supernatant acid solution is removed again through centrifugation, and then the anode material is washed with pure water to neutral and dried, so as to obtain the anode material with the silicon particles removed, which is the carbon matrix.

It may be understood that, sizes of the silicon particles deposited in the pores of the carbon matrix are affected by sizes of the pores. If the proportion of the micropores is higher, an average pore diameter of the pores of the carbon matrix is smaller, and the particle sizes of the silicon particles deposited in the pores of the carbon matrix are smaller. The particle sizes of the silicon particles deposited in the pores of the carbon matrix are small, and volume expansion of the anode material during cycling is small, such that the cycling performance of the anode material is improved. Preferably, the proportion of the micropores is ≥90%, and further preferably, the proportion of the micropores is ≥95%.

In some implementations, in the anode material with the silicon particles removed, a volume proportion of the pores with a pore diameter within a range of 2 nm-5 nm in the total pore volume of the anode material with the silicon particles removed is 0%-10%. Optionally, the volume proportion of the pores with a pore diameter within a range of 2 nm-5 nm with the silicon particles removed in the total pore volume of the anode material with the silicon particles removed may specifically be 0%, 1%, 2%, 3%, 4%, 5%, 6%, 7%, 8%, 9%, 10%, etc., or may be other values within the range, may be selected according to actual requirements, and is not limited herein.

In some implementations, an average pore diameter of the anode material with the silicon particles removed is ≤5 nm. Optionally, the average pore diameter of the anode material with the silicon particles removed may specifically be 5 nm, 4 nm, 3 nm, 2 nm, 1 nm, or the like, or may also be other values within the range, may be selected according to actual requirements, and is not limited herein.

In some implementations, the total pore volume of the anode material with the silicon particles removed is 0.2 cm³/g-2 cm³/g. Optionally, the total pore volume of the anode material with the silicon particles removed may specifically be 0.2 cm³/g, 0.4 cm³/g, 0.6 cm³/g, 0.8 cm³/g, 1 cm³/g, 1.2 cm³/g, 1.4 cm³/g, 1.6 cm³/g, 1.8 cm³/g, 2 cm³/g, or the like, or may also be other values within the range, may be selected according to actual requirements, and is not limited herein. It may be understood that, the anode material with the silicon particles removed is the carbon matrix. By controlling the total pore volume of the carbon matrix within the range, the structural strength of the carbon matrix can be guaranteed, and sufficient pores can also be reserved for filling with the silicon particles, such that the anode material after the carbon matrix and the silicon particles are combined can have excellent rate performance and cycling performance.

In some implementations, the particle size of the anode material meets: 2 µm≤D₅₀≤20 µm, and 0.9≤ (D₉₀-D₁₀)/D₅₀≤5. The particle size D₅₀ of the anode material may specifically be 2 µm, 5 µm, 10 µm, 12 µm, 15 µm, 18 µm, 20 µm, or the like, and (D₉₀-D₁₀)/D₅₀ may specifically be 0.9, 1, 2, 3, 4, 5, or the like, or may also be other values within the range, may be selected according to actual requirements, and is not limited herein. (D₉₀-D₁₀)/D₅₀ reflects the particle size distribution span of the anode material. When the particle size distribution span is too small, the screening and preparation cost of the anode material is high; and when the particle size distribution span is too large, it indicates that the particle size distribution of the anode material is wide, leading to uneven volume changes in the battery prepared by the anode material during cycling.

In some implementations, the specific surface area of the anode material is 1 m²/g-10 m²/g. Optionally, the specific surface area of the anode material may specifically be 1 m²/g, 2 m²/g, 3 m²/g, 4 m²/g, 5 m²/g, 6 m²/g, 7 m²/g, 8 m²/g, 9 m²/g, 10 m²/g, or the like, or may also be other values within the range, may be selected according to actual requirements, and is not limited herein. It may be understood that, the specific surface area of the anode material is within the range, more intercalation sites may be provided for the lithium ions to reduce a contact area between the anode plate prepared by the anode material and the electrolyte while providing more insertion sites for lithium ions so as to increase the capacity of a lithium ion battery, such that the occurrence of side reactions is reduced, thereby improving the cycling performance of the battery prepared by the anode material.

In some implementations, a compaction density of the anode material is 0.80 cm³/g-1.30 cm³/g. Optionally, the compaction density of the anode material may specifically be 0.80 cm³/g, 0.90 cm³/g, 1 cm³/g, 1.1 cm³/g, 1.2 cm³/g, 1.3 cm³/g, or the like, or may also be other values within the range, may be selected according to actual requirements, and is not limited herein. It may be understood that, the compaction density of the anode material is within the range, such that an anode plate per unit volume may accommodate more anode materials, facilitating the increasing of a volume energy density of the battery.

In some implementations, a tap density of the anode material is 0.5 cm³/g-1.5 cm³/g. Optionally, the tap density of the anode material may specifically be 0.5 cm³/g, 0.7 cm³/g, 0.9 cm³/g, 1.1 cm³/g, 1.3 cm³/g, 1.5 cm³/g, or the like, or may also be other values within the range, may be selected according to actual requirements, and is not limited herein.

In some implementations, a mass content of carbon element in the anode material is 40%-60%. Optionally, the mass content of the carbon element in the anode material may specifically be 40%, 42%, 44%, 46%, 48%, 50%, 52%, 54%, 56%, 58%, 60%, etc., or may be other values within the range, may be selected according to actual requirements, and is not limited herein.

In some implementations, a mass content of silicon element in the anode material is 35%-55%. Optionally, the mass content of the silicon element in the anode material may specifically be 35%, 37%, 39%, 41%, 43%, 45%, 47%, 49%, 51%, 53%, 55%, etc., or may be other values within the range, may be selected according to actual requirements, and is not limited herein.

In some implementations, the carbon matrix has pores, and at least partial silicon particles are distributed in the pores of the carbon matrix. The silicon particle active substances are filled in the pores of the carbon material, ensuring a diffuse distribution of the silicon particle active substances and the carbon matrix. On the one hand, the specific capacity of the anode material is improved, and on the other hand, the pores of the carbon material filled with the silicon particle active substances are reduced, such that the density of the anode material may be increased, and the occurrence of side reactions between the anode plate prepared by the anode material and the electrolyte is effectively reduced, thereby further improving the cycling performance of the battery prepared by the anode material.

In some implementations, the carbon matrix includes at least one of amorphous carbon, graphitized carbon, mesocarbon microbeads, or carbon gel. The amorphous carbon includes at least one of hard carbon, soft carbon, or activated carbon; the graphitized carbon includes at least one of graphite or graphitized carbon nanotubes; and the type of the carbon matrix may be selected according to actual requirements, and is not limited herein.

In some implementations, at least one of a surface of the carbon matrix, a carbon-carbon skeleton, a gap between carbon layers, or a lattice defect contains a functional group, and the functional group contains at least one of the oxygen element, the nitrogen element, or the sulfur element. The functional group includes at least one of hydroxyl, carboxyl, carbonyl, an ester group, a cyclic lactone group, amino, sulfhydryl, sulfate, sulfite, thioether, or a sulfonic acid group. The type of the functional group may be selected according to actual requirements, and is not limited herein.

In some implementations, the anode material has a coating layer on the surface. A material of the coating layer includes at least one of a carbon material, titanium nitride, boron nitride, silicon nitride, silicon oxide, magnesium oxide, aluminum oxide, silicon carbide, or polyaniline. The type of the material of the coating layer may be selected according to actual requirements, and is not limited herein.

In a second aspect, the present disclosure provides a method for preparing an anode material. The preparation method includes the following steps: a primary carbonization treatment is performed on a mixture including a carbon source and a modified substance, so as to obtain a precursor, where the modified substance includes an oxygen element and a nitrogen element; a secondary carbonization treatment is performed on the precursor to obtain a carbon matrix; and the carbon matrix is combined with silicon particles or a silicon material to obtain an anode material.

According to the method for preparing an anode material provided in the present disclosure, the mixture of the carbon source and the modified substance containing the oxygen element and the nitrogen element is used for the primary carbonization treatment and the secondary carbonization treatment, so as to increase the graphitization degree of carbon matrix, and during the secondary carbonization treatment, more oxygen-containing or nitrogen-containing groups are volatilized, such that mass contents of nitrogen and oxygen in the carbon matrix can be controlled. The doping of small amounts of the oxygen element and the nitrogen element may provide lone pair electrons, and the lone pair electrons participate in a π-π conjugated system of the carbon matrix, such that a larger p-π conjugated system is formed, thereby improving the electronic conductivity of the anode material. Finally, the capacity of the anode material may be increased by combining the carbon matrix with the silicon particles or the silicon material.

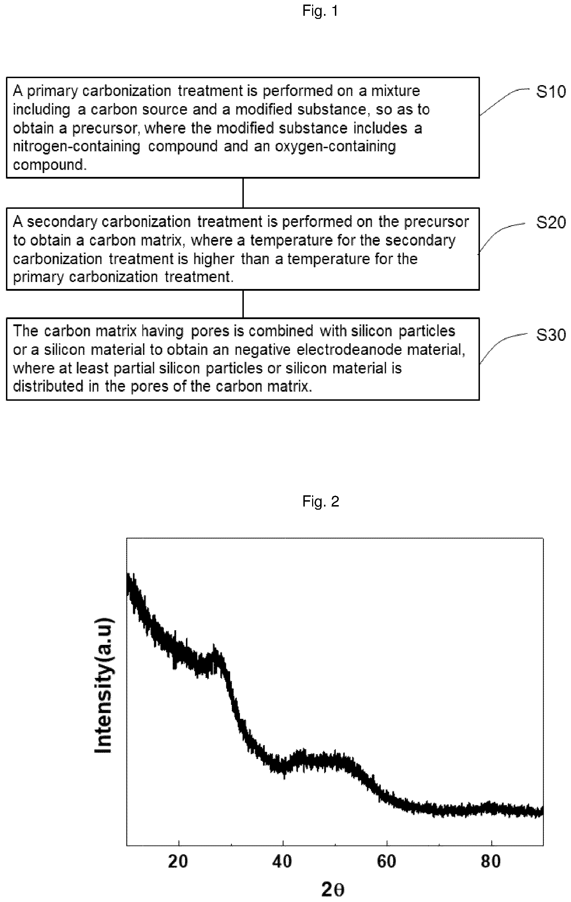

In some implementations, a method for preparing an anode material is provided. As shown in Fig. 1, the preparation method includes the following steps.

At S10, a primary carbonization treatment is performed on a mixture including a carbon source and a modified substance, so as to obtain a precursor, where the modified substance includes a nitrogen-containing compound and an oxygen-containing compound.

At S20, a secondary carbonization treatment is performed on the precursor to obtain a carbon matrix, where a temperature for the secondary carbonization treatment is higher than a temperature for the primary carbonization treatment.

At S30, the carbon matrix having pores is combined with silicon particles or a silicon material to obtain an anode material, where at least partial silicon particles or silicon material is distributed in the pores of the carbon matrix.

According to the method for preparing an anode material, the mixture of the carbon source and the modified substance is used for the primary carbonization treatment, such that the modified substance can be doped in the carbon matrix; then the secondary carbonization treatment is performed, and the temperature for the secondary carbonization treatment is controlled to be higher than the temperature for the primary carbonization treatment, such that a graphitization degree of the carbon matrix is increased by means of high temperatures, thereby improving the electronic conductivity of the carbon matrix itself. Furthermore, during the secondary carbonization treatment, more oxygen-containing or nitrogen-containing groups are volatilized, such that mass contents of nitrogen and oxygen in the carbon matrix can be controlled. The doping of small amounts of the oxygen element and the nitrogen element may provide lone pair electrons, and the lone pair electrons participate in a π-π conjugated system of the carbon matrix, such that a larger p-π conjugated system is formed, thereby improving the electronic conductivity of the anode material. Finally, the capacity of the anode material may be increased by combining the carbon matrix with the silicon particles or the silicon material. The carbon matrix has the pores, the volume expansion of the silicon particles or the silicon material is relieved during the cycling of the anode material, so as to maintain structure stability, such that the collapse of a material structure caused by the volume expansion of the anode material during lithium intercalation/lithium deintercalation is reduced, and the occurrence of the side reactions between the anode material and the electrolyte is effectively reduced, thereby improving the cycling performance of the anode material.

The preparation method is described below in detail with reference to specific embodiments.

At S10, the primary carbonization treatment is performed on the mixture including the carbon source and the modified substance, so as to obtain the precursor, where the modified substance includes the nitrogen-containing compound and the oxygen-containing compound.

In some implementations, the carbon source includes at least one of bamboo carbon, fruit shells, starch, coconut shells, rice shells, peanut shells, coal, lignin, carbohydrates, resins, or the like.

In some implementations, the temperature for the primary carbonization treatment is 600 °C-900 °C, which may specifically be 600 °C, 650 °C, 700 °C, 750 °C, 800 °C, 850 °C, 900 °C, etc., and is not limited herein. A time for the carbonization treatment is 1 h-15 h, which may specifically be 1 h, 3 h, 5 h, 8 h, 10 h, 12 h, 13 h, 14 h, 15 h, etc., and is not limited herein.

In some implementations, the nitrogen-containing compound includes at least one of urea, ammonium acetate, methanolamine, ammonium chloride, ammonium nitrate, or N,N-dimethylformamide. **It** may be understood that, the urea-based nitrogen-containing compound itself contains the oxygen element and the nitrogen element, such that doping modification of the carbon source may be realized. Although the compound such as the ammonium chloride does not contain the oxygen element, during the primary carbonization treatment, oxygen in an environment can also participate in doping modification together with the nitrogen element in the modified substance.

In some implementations, a mass ratio of the carbon source to the nitrogen-containing compound is 100:(0.5-100), which may specifically be 100:0.5, 100:1, 100:5, 100:10, 100:20, 100:30, 100:50, 100:60, 100:80, 100:90, 100:100, etc., or may definitely be other values within the above range, and is not limited herein.

In some implementations, the method further includes: a primary carbonization treatment product is placed in a mixed gas of nitrogen and water vapor for an activation treatment. **It** may be understood that, through activation treatment, the silicon particles or the silicon material is directionally deposited in the pores of the carbon matrix during the subsequent silicon deposition, so as to reduce the deposition of the silicon particles or the silicon material on the surface of the carbon matrix.

An activation treatment mode includes at least one of a physical activation treatment or a chemical activation treatment. Specifically, chemical activation may use lye as an active agent to treat the primary carbonization treatment product. Physical activation may perform the activation treatment by using at least two of water vapor, oxygen, or air.

In some implementations, the primary carbonization treatment product is placed in the mixed gas of nitrogen and water vapor for the activation treatment.

In some implementations, a volume concentration of the water vapor is 0.1%-30%, which may specifically be 0.1%, 1%, 2%, 3%, 5%, 8%, 10%, 12%, 15%, 18%, 20%, 25%, 30%, etc., and is not limited herein.

In some implementations, a temperature for the activation treatment is 380 °C-2000 °C, and a time for the activation treatment is 0.5 h-30 h. Specifically, the temperature for the activation treatment may be 380 °C, 400 °C, 500 °C, 800 °C, 1000 °C, 1200 °C, 1500 °C, 1800 °C, 2000 °C, etc., which is not limited herein. The time for the activation treatment may be specifically be 0.5 h, 1 h, 3 h, 5 h, 8 h, 10 h, 12 h, 15 h, 18 h, 24 h, 30 h, which is not limited herein.

In the present disclosure, by controlling the volume concentration of the water vapor, and the temperature and time for the activation treatment, the activation efficiency of the primary carbonization product may be improved, such that the carbon matrix can have abundant pore structures, and an oxygen-containing functional group (e.g., carboxyl, carbonyl, etc.) is contained in the surface and/or pores of the carbon matrix after the activation treatment, or is present in positions such as a skeleton of the carbon matrix, a gap between the skeletons, a defect, etc. by means of doping atoms. A small amount of the oxygen-containing functional groups can provide lone pair electrons after the subsequent carbonization treatment, and the lone pair electrons participate in a π-π conjugated system of the carbon matrix, such that a larger p-π conjugated system is formed, thereby improving the electronic conductivity of the anode material.

In some implementations, the carbon matrix includes at least one of hard carbon, soft carbon, graphite, mesocarbon microbeads, activated carbon, porous carbon, mesoporous carbon, or carbon gel.

In some implementations, a total pore volume of the carbon matrix is ≥0.4 cm³/g, which may specifically be 0.4 cm³/g, 0.5 cm³/g, 0.8 cm³/g, 1 cm³/g, 1.1 cm³/g, 1.3 cm³/g, 1.5 cm³/g, 1.8 cm³/g, or the like, or may definitely be other values within the above range, and is not limited herein. Preferably, the total pore volume of the carbon matrix is ≥0.5 cm³/g, and further preferably, the total pore volume of the carbon matrix is ≥0.7 cm³/g.

In some implementations, the pores of the carbon matrix include micropores with a pore diameter less than 2 nm, and a proportion of the micropores is ≥80%. Specifically, the proportion of the micropores may be 80%, 82%, 85%, 88%, 90%, 92%, 93%, 95%, 98%, 99%, etc., and is not limited herein. Preferably, the proportion of the micropores is ≥90%, and further preferably, the proportion of the micropores is ≥95%.

In some implementations, a porosity of the carbon matrix is 40%-60%, may specifically be 40%, 41%, 43%, 45%, 48%, 50%, 52%, 54%, 56%, 58%, 60%, or the like, or may definitely be other values within the above range, which is not limited herein.

In some implementations, an average particle size of the carbon matrix is 1 µm-15 µm, which may specifically be 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, etc., or may definitely be other values within the above range, and is not limited herein.

In some implementations, an average pore diameter of the carbon matrix is 0.1 nm-5 nm. Specifically, the average pore diameter of the carbon matrix is 0.1 nm, 0.5 nm, 1 nm, 2 nm, 3 nm, 4 nm, 5 nm, etc., which is not limited herein.

At S20, the secondary carbonization treatment is performed on the precursor to obtain the carbon matrix, where the temperature for the secondary carbonization treatment is higher than the temperature for the primary carbonization treatment.

In some implementations, the temperature for the secondary carbonization treatment is 900 °C-2000 °C. The temperature for the secondary carbonization treatment may be 900 °C, 1000 °C, 1050 °C, 1200 °C, 1300 °C, 1400 °C, 1500 °C, 1800 °C, 2000 °C, etc., which is not limited herein. Preferably, the temperature for the secondary carbonization treatment is 900 °C-1800 °C, more preferably, 900 °C-1300 °C.

In some implementations, a time for the secondary carbonization treatment is 1 h-30 h, which may specifically be 1 h, 3 h, 5 h, 8 h, 10 h, 12 h, 15 h, 18 h, 24 h, or 30 h, etc., and is not limited herein.

At S30, the carbon matrix having pores is combined with the silicon particles or the silicon material to obtain the anode material, where at least partial silicon particles or silicon material is distributed in the pores of the carbon matrix.

In some implementations, the step of combining the carbon matrix having pores with the silicon particles or the silicon material includes: a silicon source gas is used to perform vapor deposition on the carbon matrix having pores, so as to obtain an active substance.

In some implementations, the silicon source gas includes at least one of monosilane, disilane, monochlorosilane, or dichlorosilane.

In some implementations, a volume concentration proportion of the silicon source gas is 1%-90%. The volume concentration proportion of the silicon source gas may specifically be 1%, 5%, 10%, 15%, 20%, 30%, 50%, 60%, 70%, 80%, 90%, etc., but is not only limited to the enumerated values, and other values not enumerated within the value range are also applicable.

In some implementations, a deposition time for vapor deposition is 0.1 h-15 h. The deposition time may specifically be 0.1 h, 0.5 h, 1 h, 3 h, 5 h, 6 h, 8 h, 10 h, 12 h, 15 h, etc., which is not limited herein.

In some implementations, a deposition temperature for vapor deposition is 300 °C-800 °C. The deposition temperature may specifically be 300 °C, 350 °C, 400 °C, 500 °C, 600 °C, 650 °C, 700 °C, 800 °C, or the like, or may definitely be other values within the above range, which is not limited herein. **It** may be understood that, by controlling the temperature for vapor deposition within the range, a crystal form of the silicon particles is controlled, the crystallinity of the silicon particles is reduced, and the conversion from amorphous silicon to crystalline silicon is reduced, such that the volume expansion of the anode material is reduced, thereby improving the cycling performance of the anode material.

In some implementations, the method further includes: a carbon coating treatment is performed on the active substance to obtain the anode material; and the carbon coating treatment includes at least one of solid phase carbon coating, liquid phase carbon coating, or gas phase carbon coating.

**It** may be understood that, the carbon coating treatment is performed on the active substance, and a carbon material is formed on at least partial surface of the active substance. In an aspect, a direct contact between the anode material and electrolyte may be reduced to reduce the occurrence of side reactions between the anode material and the electrolyte, thereby improving the electrochemical performance of the anode material. In another aspect, mechanical stress caused by the volume expansion of the anode material may also be relieved, such that the structure stability of the anode material is improved, and interface stability is improved, thereby improving the cycling performance of the anode material.

In some implementations, the step of the carbon coating treatment specifically includes: the active substance is heated, then a protective gas and a carbon source gas are introduced, and thermal cracking is performed on the carbon source gas, so as to obtain the anode material having the carbon material on the surface.

In some implementations, the step of the carbon coating treatment specifically includes: the active substance is heated, then the protective gas and the carbon source gas are introduced, and thermal cracking is performed on the carbon source gas, so as to obtain the anode material, where the carbon source gas is hydrocarbon.

In some implementations, the carbon source gas includes at least one of methane, ethylene, acetylene, propyne, propylene, propane, toluene, benzene, styrene, or phenol.

In some implementations, a temperature for thermal cracking is 600 °C-1000 °C, and a time for thermal cracking is 30 min-24 h.

Specifically, the temperature for thermal cracking may be 600 °C, 620 °C, 650 °C, 680 °C, 700 °C, 760 °C, 870 °C, 900 °C, 920 °C, 950 °C, 980 °C, 1000 °C, etc., which is not limited herein. The time for thermal cracking may specifically be 30 min, 1 h, 3 h, 5 h, 8 h, 12 h, 15 h, 18 h, 20 h, 22 h, 24 h, etc., which is not limited herein.

In some implementations, the step of the carbon coating treatment specifically includes: a carbonization treatment is performed on a mixture obtained by mixing the active substance with a solid phase carbon source, so as to obtain the anode material.

In some implementations, a temperature for the carbonization treatment is 500 °C-1000 °C, and a time for the carbonization treatment is 30 min-24 h.

Specifically, the temperature for the carbonization treatment may be 500 °C, 540 °C, 580 °C, 600 °C, 620 °C, 650 °C, 680 °C, 700 °C, 760 °C, 870 °C, 900 °C, 920 °C, 950 °C, 980 °C, 1000 °C, etc., which is not limited herein. The time for the carbonization treatment may specifically be 30 min, 1 h, 3 h, 5 h, 8 h, 12 h, 15 h, 18 h, 20 h, 22 h, 24 h, etc., which is not limited herein.

In some implementations, the solid phase carbon source includes at least one of sugar, ester, hydrocarbon, organic acid, or high molecular polymer.

In some implementations, the solid phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, or phenolic resin.

In some implementations, a mass ratio of the solid phase carbon source to the anode material is (1-200):100, which may specifically be 1:100, 2:100, 5:100, 10:100, 50:100, 100:100, 150:100, 180:100, 200:100, etc., and is not limited herein.

In some implementations, the step of the carbon coating treatment specifically includes: a carbonization treatment is performed on a mixture obtained by mixing the active substance with a liquid phase carbon source, so as to obtain the anode material.

In some implementations, a mass ratio of the liquid phase carbon source to the anode material is (1-200):100, which may specifically be 1:100, 2:100, 5:100, 10:100, 50:100, 100:100, 150:100, 180:100, 200:100, etc., and is not limited herein.

In some implementations, the liquid phase carbon source includes at least one of hexane, toluene, benzene, xylene, methanol, ethanol, propanol, butanol, pentanol, acetone, butanone, 2-pentanone, methyl acetate, ethyl acetate, propyl acetate, butyl acetate, or amyl acetate.

In some implementations, the temperature for the carbonization treatment is 600 °C-1200 °C, and the time for the carbonization treatment is 2 h-20 h.

Specifically, the temperature for the carbonization treatment may be 600 °C, 620 °C, 650 °C, 680 °C, 700 °C, 760 °C, 870 °C, 900 °C, 920 °C, 950 °C, 980 °C, 1000 °C, 1020 °C, 1080 °C, 1100 °C, 1160 °C, 1200 °C, etc., which is not limited herein. The time for the carbonization treatment may specifically be 2 h, 3 h, 5 h, 8 h, 12 h, 15 h, 18 h, 20 h, 22 h, 24 h, 25 h, 26 h, 28 h, 30 h, etc., which is not limited herein.

In some implementations, the carbon coating treatment is performed under a protective atmosphere. The protective atmosphere includes at least one of nitrogen, helium, neon, argon, or krypton.

In some implementations, the method further includes: a carbon coating treatment product is shaped, sieved, and graded to obtain the anode material having the carbon material on the surface. The shaping treatment includes at least one of crushing, grinding, ball milling, or gas crushing.

In some implementations, a method for preparing an anode material is provided. The preparation method includes the following steps: at S10, a carbonization treatment is performed on a mixture including a carbon source and a doped material, so as to obtain a precursor, where the doped material contains an oxygen element, a nitrogen element, and a sulfur element; at S20, a high-temperature treatment and a third activation treatment are performed on the precursor to obtain a carbon matrix; and at S30, the carbon matrix and silicon particles are combined to obtain an anode material.

According to the method for preparing an anode material provided in the above solution, during the preparation of the precursor, the oxygen element, the nitrogen element, and the sulfur element in the doped material are doped in the carbon source to obtain the carbon matrix, so as to prepare the anode material having excellent conductivity and cycling performance in the present disclosure.

The preparation method is introduced below in detail with reference to embodiments.

At S10, the carbonization treatment is performed on a mixture including the carbon source and a modified substance, so as to obtain a precursor, where the modified substance contains an oxygen element, a nitrogen element, and a sulfur element.

In some implementations, the carbon source includes at least one of resin-based polymers, lignin, coconut shells, fruit shells, peanut shells, rice husks, or coal-to-biomass. The type of the carbon source may be selected according to actual requirements, and is not limited herein.

In some implementations, the modified substance includes a nitrogen-containing doped material and a sulfur-containing doped material. The nitrogen-containing doped material includes at least one of urea, ammonium acetate, ethanolamine, methanolamine, ammonium chloride, ammonium nitrate, or N,N-dimethylformamide. The sulfur-containing doped material includes at least one of thioalcohol, ammonium bisulfate, thiophenol, thioether, or disulfide. Types of the nitrogen-containing doped material and sulfur-containing doped material may be selected according to actual requirements, and are not limited herein.

In some implementations, a mass ratio of the carbon source, the nitrogen-containing doped material, and the sulfur-containing doped material is 100:(0.01-10):0.01-5). Optionally, the mass ratio of the carbon source, the nitrogen-containing doped material, and the sulfur-containing doped material may specifically be 100:0.4:0.2, 100:1:0.3, 100:2:0.2, 100:4:4.2, 100:5:0.1, 100:9:5, etc., or may be other values within the range, may be selected according to actual requirements, and is not limited herein. It may be understood that, the mass ratio of the carbon source, the nitrogen-containing doped material, and the sulfur-containing doped material within the range, such that the structure stability of the carbon matrix is guaranteed while improving the conductivity of the carbon matrix.

In some implementations, the temperature for the primary carbonization treatment is 600 °C-900 °C, and the time for the carbonization treatment is 1 h-30 h. Optionally, the temperature for the primary carbonization treatment may specifically be 600 °C, 650 °C, 700 °C, 750 °C, 800 °C, 850 °C, 900 °C, etc., and the time for the primary carbonization treatment may specifically be 1 h, 5 h, 10 h, 14 h, 21 h, 25 h, 28 h, 30 h, etc., or may be other values within the range, may be selected according to actual requirements, and is not limited herein. **It** may be understood that, the temperature and time for the primary carbonization treatment are within the ranges, such that a carbon content in the obtained carbon matrix is better, and the conductivity of the carbon matrix is better.

At S20, a secondary carbonization treatment and a third activation treatment are performed on the precursor, so as to obtain the carbon matrix.

In some implementations, a temperature for the secondary carbonization treatment is 900 °C-2500 °C, and a time for the secondary carbonization treatment is 1 h-40 h. Optionally, the temperature for the secondary carbonization treatment may specifically be 900 °C, 1000 °C, 1100 °C, 1200 °C, 1300 °C, 1400 °C, 1500 °C, 1600 °C, 1700 °C, 1800 °C, 1900 °C, 2000 °C, 2100 °C, 2200 °C, 2300 °C, 2400 °C, 2500 °C, etc., and the time for the secondary carbonization treatment may specifically be 1 h, 4 h, 8 h, 12 h, 19 h, 22 h, 28 h, 33 h, 35 h, 40 h, etc., or may be other values within the range, may be selected according to actual requirements, and is not limited herein. **It** may be understood that, a temperature and time for the high-temperature treatment are within the ranges, such that contents of the nitrogen, oxygen, and sulfur elements doped in the carbon matrix may be adjusted, thereby promoting the electrochemical performance and structure stability of the anode material to be better.

In some implementations, the third activation treatment includes physical activation and/or chemical activation. Physical activation includes at least one of water vapor activation, nitrogen activation, oxygen activation, or air activation. Chemical activation includes lye activation. The type of the activation treatment may be selected according to actual requirements, and is not limited herein.

In some implementations, the third activation treatment includes at least one primary activation process, that is, the activation treatment may only perform the primary activation process, or may also continuously perform a secondary activation process after the primary activation process, or a plurality of activation processes. The number of times for the activation treatment may be selected according to actual requirements, and is not limited herein.

**It** may be understood that, through the activation treatment of the precursor, the carbon matrix can have abundant pore structures, such that the silicon particles are directionally deposited in the pores of the carbon matrix during the subsequent silicon deposition, thereby reducing the deposition of the silicon particles on the surface of the carbon matrix.

Preferably, the activation treatment of the present disclosure includes the primary activation process and the secondary activation process. **It** may be understood that, through the secondary activation process, more and uniformly-distributed activated pores can be formed in the carbon matrix, thereby facilitating the subsequent filling of the silicon particles in the activated pores.

In some implementations, a temperature for the primary activation process is 400 °C-1000 °C, and a time for the primary activation process is 1 h-30 h. Optionally, the temperature for the primary activation process may specifically be 400 °C, 500 °C, 600 °C, 700 °C, 800 °C, 850 °C, 900 °C, 1000 °C, etc., and the time for the primary activation process may specifically be 1 h, 4 h, 8 h, 12 h, 19 h, 22 h, 28 h, 30 h, etc., or may be other values within the range, may be selected according to actual requirements, and is not limited herein.

In some implementations, a temperature for the secondary activation process is 500 °C-900 °C, and a time for the secondary activation process is 1 h-30 h. Optionally, the temperature for the secondary activation process may specifically be 500 °C, 600 °C, 700 °C, 800 °C, 850 °C, 900 °C, etc., and the time for the secondary activation process may specifically be 1 h, 4 h, 8 h, 12 h, 19 h, 22 h, 28 h, 30 h, etc., or may be other values within the range, may be selected according to actual requirements, and is not limited herein.

At S30, the carbon matrix having pores is combined with the silicon particles to obtain the anode material.

In some implementations, the preparation method further includes performing a coating treatment on a compound after combining the carbon matrix and the silicon particles.

In some implementations, a coating material includes at least one of a carbon source, titanium nitride, boron nitride, silicon nitride, silicon oxide, magnesium oxide, aluminum oxide, silicon carbide, or polyaniline. The type of the coating material may be selected according to actual requirements, and is not limited herein.

In some implementations, a mass ratio of the carbon matrix to the coating material is (10-100):(0.1-10). Optionally, the mass ratio of the carbon matrix to the coating material may specifically be 10:0.1, 20:0.5, 40:1, 50:0.1, 70:10, 100:10, etc., or may be other values within the range, may be selected according to actual requirements, and is not limited herein. **It** may be understood that, the mass ratio of the carbon matrix to the coating material is within the range, such that the obtained coating layer may play a good role in coating and protecting the carbon matrix without affecting the diffusion of lithium ions during charging and discharging, thereby ensuring the cycling performance of a lithium ion battery.

In a fourth aspect, the present disclosure provides a battery. The battery includes the anode material of the first aspect or an anode material prepared by the method for preparing an anode material of the second aspect. The battery may be a lithium ion battery, a sodium ion battery, or the like, which is not limited herein.

The above were only preferred embodiments of the present disclosure, and were not used to limit the present disclosure. Any modifications, equivalent replacements and improvements and the like made within the spirit and principle of the present disclosure should be included within the scope of protection of the present disclosure.

### Embodiment 1

A method for preparing an anode material in this embodiment included the following steps.
(1) Bamboo carbon and urea were mixed according to a mass ratio of 100:1, a primary carbonization treatment was performed on the mixture, and a primary carbonization temperature was 750 oC, and was held for 5 h; a primary carbonization product was placed in water vapor and nitrogen for a primary activation treatment, water vapor:nitrogen=0.1:90 (volume ratio), a primary activation temperature was 650 °C, a primary activation time was 4 h, and a primary activation product was obtained; and the primary activation product was placed in a heat treatment furnace for secondary activation, a secondary activation temperature was 950 °C, a secondary activation time was 3 h, and a precursor was obtained.
(2) The precursor was placed in the heat treatment furnace for a secondary carbonization treatment, a temperature for the secondary carbonization treatment was 900 °C and was held for 10 h, so as to obtain a carbon matrix with an average pore diameter of 1.8 nm, and the carbon matrix had pores.
(3) The carbon matrix was placed in a Chemical Vapor Deposition (CVD) device, then silane was introduced into the CVD device, a volume concentration of the silane was controlled at 40%, a temperature was heated to 600 °C, and a vapor deposition reaction was performed for 4 h, so as to obtain a compound.
(4) The compound and asphalt were mixed according to a mass ratio of 50:15, then a mixed material was placed in a high temperature box furnace, nitrogen was introduced, a solid phase carbon coating treatment was performed at 520 °C, the temperature was held for 2 h, and a carbon coating treatment product was crushed, sieved, and then graded, so as to obtain an anode material.

The anode material prepared in this embodiment of the present disclosure included an active substance and a carbon material located on the surface of the active substance. The active substance included the carbon matrix and silicon particles. The carbon matrix had pores, and at least partial silicon particles were distributed in the pores of the carbon matrix.

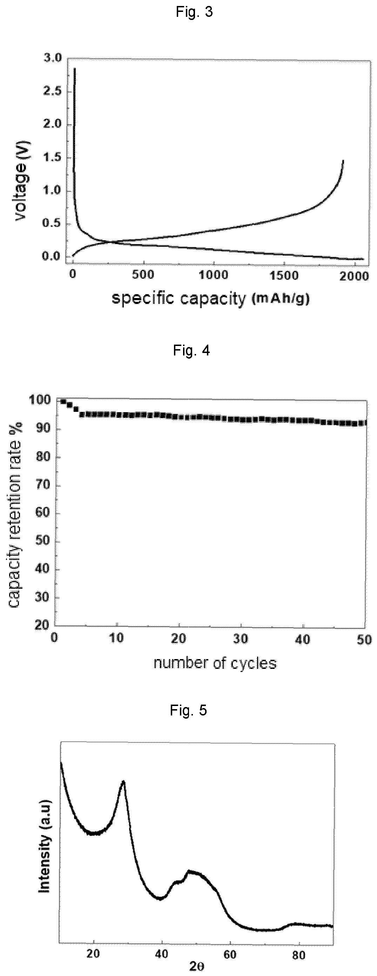

Fig. 2 was an XRD diagram of an anode material prepared according Embodiment 1 of the present disclosure. As shown in Fig. 2, the active substance in the anode material was amorphous. Fig. 3 was a schematic diagram of a first charging and discharging curve of an anode material prepared according Embodiment 1 of the present disclosure. As shown in Fig. 3, a first charging and discharging capacity of the anode material was 1938 mAh/g, and initial coulombic efficiency was 93.1%, such that the anode material had excellent electrochemical performance. Fig. 4 was a schematic diagram of a cycling performance curve of an anode material prepared according Embodiment 1 of the present disclosure. As shown in Fig. 4, a capacity retention rate of a battery prepared by the anode material for 50 cycles was 93.1 %, such that it might be seen that the anode material had excellent cycling performance.

### Embodiment 2

A method for preparing an anode material in this embodiment included the following steps.
(1) Commercial porous carbon and ethanolamine were mixed according to a mass ratio of 100:1.5, a primary carbonization treatment was performed on the mixture, and a primary carbonization temperature was 850 °C and was held for 8 h, so as to obtain a precursor.
(2) The precursor was placed in the heat treatment furnace for a secondary carbonization treatment, a temperature for the secondary carbonization treatment was 1900 °C and was held for 12 h, so as to obtain a carbon matrix with an average pore diameter of 3.9 nm, and the carbon matrix had pores.
(3) The carbon matrix was placed in a CVD device, then silane was introduced into the CVD device, a volume concentration of the silane was controlled at 20%, a temperature was heated to 550 °C, and a vapor deposition reaction was performed for 4 h, so as to obtain a compound.
(4) Methane was continuously introduced into the CVD device, a volume concentration of the methane was controlled at 29%, the temperature was heated to 650 °C for a gas phase carbon coating treatment on the composite, the temperature was held for 4 h, and a carbon coating treatment product was crushed, sieved, and then graded, so as to obtain an anode material.

### Embodiment 3

(1) A coconut shell and ammonium chloride were mixed according to a mass ratio of 100:0.5, a primary carbonization treatment was performed on the mixture, and a primary carbonization temperature was 700 °C, and was held for 15 h; a primary carbonization product was placed in water vapor and nitrogen for a primary activation treatment, water vapor:nitrogen=0.5:90 (volume ratio), a primary activation temperature was 750 °C, a primary activation time was 4 h, and a primary activation product was obtained; and the primary activation product was placed in a heat treatment furnace for secondary activation, a secondary activation temperature was 850 °C, a secondary activation time was 5 h, and a precursor was obtained.
(2) The precursor was placed in the heat treatment furnace for a secondary carbonization treatment, a temperature for the secondary carbonization treatment was 1000 °C and was held for 6 h, so as to obtain a carbon matrix with an average pore diameter of 1.7 nm, and the carbon matrix had pores.
(3) The carbon matrix was placed in a CVD device, then silane was introduced into the CVD device, a volume concentration of the silane was controlled at 31%, a temperature was heated to 500 °C, and a vapor deposition reaction was performed for 4 h, so as to obtain a compound.
(4) Acetylene was continuously introduced into the CVD device, a volume concentration of the acetylene was controlled at 45%, the temperature was heated to 650 °C for a gas phase carbon coating treatment on the composite, the temperature was held for 4 h, and a carbon coating treatment product was crushed, sieved, and then graded, so as to obtain an anode material.

The anode material prepared in this embodiment of the present disclosure included an active substance. The active substance included the carbon matrix and silicon particles. The carbon matrix had pores, and at least partial silicon particles were distributed in the pores of the carbon matrix.

### Embodiment 4

(1) A fruit shell and ammonium bicarbonate were mixed according to a mass ratio of 100:3.3, a primary carbonization treatment was performed on the mixture, and a primary carbonization temperature was 710 °C, and was held for 6 h; a primary carbonization product was placed in water vapor and nitrogen for a primary activation treatment, water vapor:nitrogen=0.9:90 (volume ratio), a primary activation temperature was 550 °C, a primary activation time was 5 h, and a primary activation product was obtained; and the primary activation product was placed in a heat treatment furnace for secondary activation, a secondary activation temperature was 880 °C, a secondary activation time was 5 h, and a precursor was obtained.
(2) The precursor was placed in the heat treatment furnace for a secondary carbonization treatment, a temperature for the secondary carbonization treatment was 1200 °C and was held for 16 h, so as to obtain a carbon matrix with an average pore diameter of 2.1 nm, and the carbon matrix had pores.
(3) The carbon matrix was placed in a CVD device, then silane was introduced into the CVD device, a volume concentration of the silane was controlled at 11%, a temperature was heated to 560 °C, and a vapor deposition reaction was performed for 4 h, so as to obtain a compound.
(4) Propylene was continuously introduced into the CVD device, a volume concentration of the propylene was controlled at 45%, the temperature was heated to 690 °C for a gas phase carbon coating treatment on the composite, the temperature was held for 4 h, and a carbon coating treatment product was crushed, sieved, and then graded, so as to obtain an anode material.

### Embodiment 5

(1) Bamboo carbon and urea were mixed according to a mass ratio of 100:1, a primary carbonization treatment was performed on the mixture, and a primary carbonization temperature was 750 °C, and was held for 5 h; a primary carbonization product was placed in water vapor and nitrogen for an activation treatment, water vapor:nitrogen=0.1:90 (volume ratio), an activation temperature was 550 °C, an activation time was 24 h, and a precursor was obtained.
(2) The precursor was placed in the heat treatment furnace for a secondary carbonization treatment, a temperature for the secondary carbonization treatment was 1500 °C and was held for 10 h, so as to obtain a carbon matrix with an average pore diameter of 2.1 nm, and the carbon matrix had pores.
(3) The carbon matrix was placed in a CVD device, then silane was introduced into the CVD device, a volume concentration of the silane was controlled at 40%, a temperature was heated to 600 °C, and a vapor deposition reaction was performed for 4 h, so as to obtain a compound.
(4) The compound and asphalt were mixed according to a mass ratio of 50:15, then a mixed material was placed in a high temperature box furnace, nitrogen was introduced, a solid phase carbon coating treatment was performed at 520 °C, the temperature was held for 2 h, and a carbon coating treatment product was crushed, sieved, and then graded, so as to obtain an anode material.

### Embodiment 6

(1) Commercial porous carbon, monoethanolamine, and urea were mixed according to a mass ratio of 100:1.0:0.5, a primary carbonization treatment was performed on the mixture, and a primary carbonization temperature was 600 °C and was held for 8 h, so as to obtain a precursor.
(2) The precursor was placed in the heat treatment furnace for a secondary carbonization treatment, a temperature for the secondary carbonization treatment was 1300 °C and was held for 12 h, so as to obtain a carbon matrix with an average pore diameter of 2.2 nm, and the carbon matrix had pores.
(3) The carbon matrix was placed in a CVD device, then silane was introduced into the CVD device, a volume concentration of the silane was controlled at 40%, a temperature was heated to 550 °C, and a vapor deposition reaction was performed for 4 h, so as to obtain a compound.
(4) Methane was continuously introduced into the CVD device, a volume concentration of the methane was controlled at 35%, the temperature was heated to 800 °C for a gas phase carbon coating treatment on the composite, the temperature was held for 4 h, and a carbon coating treatment product was crushed, sieved, and then graded, so as to obtain an anode material.

### Embodiment 7

A difference between this embodiment and Embodiment 1 lied in that,
(2) The precursor was placed in the heat treatment furnace for a secondary carbonization treatment, a temperature for the secondary carbonization treatment was 2100 °C and was held for 10 h, so as to obtain a carbon matrix with an average pore diameter of 5.8 nm, and the carbon matrix had pores.

### Embodiment 8

A difference between this embodiment and Embodiment 1 lied in that,
(1) Bamboo carbon and urea were mixed according to a mass ratio of 100:1, a primary carbonization treatment was performed on the mixture, and a primary carbonization temperature was 750 °C, and was held for 5 h; a primary carbonization product was placed in water vapor and nitrogen for a primary activation treatment, water vapor:nitrogen=2:90 (volume ratio), a primary activation temperature was 650 °C, a primary activation time was 4 h, and a primary activation product was obtained; and the primary activation product was placed in a heat treatment furnace for secondary activation, a secondary activation temperature was 950 °C, a secondary activation time was 15 h, and a precursor was obtained.

### Embodiment 9

A difference between this embodiment and Embodiment 1 lied in that,
(1) Bamboo carbon and urea were mixed according to a mass ratio of 100:2.3, a primary carbonization treatment was performed on the mixture, and a primary carbonization temperature was 750 °C, and was held for 5 h; a primary carbonization product was placed in water vapor and nitrogen for a primary activation treatment, water vapor:nitrogen=0.1:90 (volume ratio), a primary activation temperature was 650 °C, a primary activation time was 4 h, and a primary activation product was obtained; and the primary activation product was placed in a heat treatment furnace for secondary activation, a secondary activation temperature was 950 °C, a secondary activation time was 30 h, and a precursor was obtained.

### Comparative example 1

A difference between this comparative example and Embodiment 1 lied in that, step (2) was not performed.

### Comparative example 2

(1) A primary carbonization treatment was performed on bamboo carbon, and a primary carbonization temperature was 750 °C, and was held for 5 h; a primary carbonization product was placed in water vapor and nitrogen for a primary activation treatment, water vapor:nitrogen=0.1:90 (volume ratio), a primary activation temperature was 650 °C, a primary activation time was 4 h, and a precursor was obtained.
(2) The precursor was placed in the heat treatment furnace for a secondary carbonization treatment, a temperature for the secondary carbonization treatment was 700 °C and was held for 10 h, so as to obtain a carbon matrix with an average pore diameter of 1.8 nm, and the carbon matrix had pores.
(3) The carbon matrix was placed in a CVD device, then silane was introduced into the CVD device, a volume concentration of the silane was controlled at 40%, a temperature was heated to 600 °C, and a vapor deposition reaction was performed for 4 h, so as to obtain a compound.
(4) The compound and asphalt were mixed according to a mass ratio of 50:15, then a mixed material was placed in a high temperature box furnace, nitrogen was introduced, a solid phase carbon coating treatment was performed at 520 °C, the temperature was held for 2 h, and a carbon coating treatment product was crushed, sieved, and then graded, so as to obtain an anode material.

### Embodiment 10

(1) Bamboo charcoal, urea, and thioalcohol were mixed according to a ratio of 100:1:0.5, so as to obtain a mixture, a carbonization treatment was performed on the mixture at 850 °C for 5 h, and a precursor was obtained.
(2) The precursor was placed in a heat treatment furnace for a high-temperature treatment, a temperature for the high-temperature treatment was 1580 °C, a temperature-holding time was 10 h. A temperature-holding product after temperature holding was completed was subjected to acid pickling, an acid pickling product was dried, then a mixed gas of water vapor and nitrogen (a volume ratio being 100:0.4) was introduced, an activation treatment was performed for 15 h at 800 °C to obtain a carbon matrix with an average pore diameter being 1.8 nm, a volume proportion of micropores in the carbon matrix was 90%, and a total pore volume was 1.6 cm³/g.
(3) The carbon matrix was placed in a CVD device, then silane was introduced in the CVD device, a concentration of the silane was controlled at 42%, a temperature was heated to 600 °C, and a reaction was performed for 4 h to obtain a silicon deposition product.
(4) The silicon deposition product and asphalt were mixed according to a mass ratio of 50:15 and placed in a high temperature box furnace after mixing, nitrogen was introduced, a heat treatment was performed at 700 °C, and the temperature was held for 2 h to obtain a coating product.
(5) The coating product was crushed, sieved, and graded to obtain an anode material.

Fig. 5 was an XRD diagram of the anode material prepared in this embodiment. As shown in Fig. 5, there was no peak position of silicon in the XRD diagram, indicating that the silicon particles present in the anode material were amorphous, and an amorphous structure of amorphous silicon promoted the anode material to have larger volume expansion tolerance. During charging and discharging, the silicon particles might perform lithium ion intercalation and deintercalation without significant volume changes as in crystalline silicon, such that the stress and breaking risk of the anode material due to volume expansion was reduced, thereby improving the mechanical stability and electrochemical stability of the anode material.

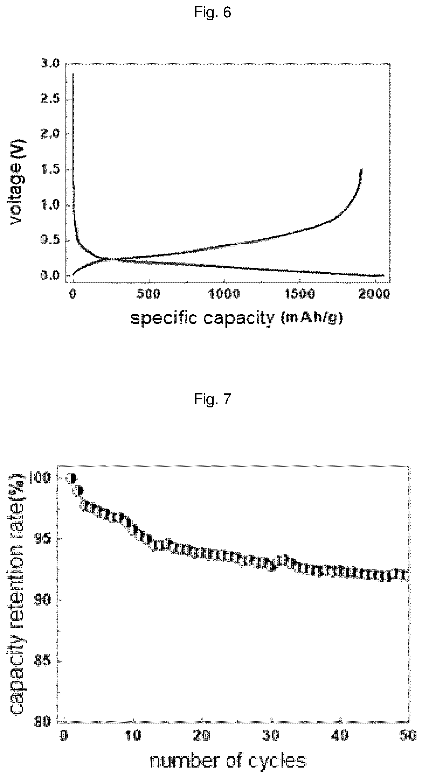

Fig. 6 was a first charging and discharging curve of the anode material prepared in this embodiment. As shown in Fig. 6, a first charging and discharging capacity of an anode material of the present disclosure was 1908 mAh/g, and initial coulombic efficiency was 92.7%, such that the anode material had excellent conductivity.

Fig. 7 was a cycling performance curve of the anode material prepared in this embodiment. As shown in Fig. 7, the anode material of the present disclosure had excellent cycling performance, and a capacity retention rate for 50 cycles was 92.5%.

### Embodiment 11

A difference between this embodiment and Embodiment 10 lied in that,
Bamboo charcoal, urea, and thioalcohol were mixed according to a ratio of 100:1:2.1, so as to obtain a mixture.

### Embodiment 12

A difference between this embodiment and Embodiment 10 lied in that,
The precursor was placed in a heat treatment furnace for a high-temperature treatment, a temperature for the high-temperature treatment was 900 °C, a temperature-holding time was 5 h.

### Embodiment 13

A difference between this embodiment and Embodiment 10 lied in that,
The precursor was placed in a heat treatment furnace for a high-temperature treatment, a temperature for the high-temperature treatment was 2500 °C, a temperature-holding time was 40 h.

### Embodiment 14

(1) Porous carbon, monoethanolamine, and ammonium bisulfate were mixed according to a ratio of 100:1.5:1, so as to obtain a mixture, a carbonization treatment was performed on the mixture at 850 °C for 8 h, and a precursor was obtained.
(2) The precursor was placed in a heat treatment furnace for a high-temperature treatment, a temperature for the high-temperature treatment was 1300 °C, a temperature-holding time was 12 h. A temperature-holding product after temperature holding was completed was subjected to acid pickling, an acid pickling product was dried, then a mixed gas of water vapor and nitrogen (a volume ratio being 100:0.4) was introduced, an activation treatment was performed for 14.5 h at 850 °C to obtain a carbon matrix with an average pore diameter being 1.9 nm, a volume proportion of micropores in the carbon matrix was 86%, and a total pore volume was 1.4 cm³/g.
(3) The carbon matrix was placed in a CVD device, then silane was introduced in the CVD device, a concentration of the silane was controlled at 26%, a temperature was heated to 500 °C, and a reaction was performed for 4 h to obtain a silicon deposition product.
(4) The silicon deposition product was placed in a CVD device, then methane was introduced in the CVD device, a concentration of the methane was controlled at 29%, a temperature was heated to 680 °C, and a reaction was performed for 4 h to obtain a coating product.
(5) The coating product was crushed, sieved, and graded to obtain an anode material.

### Embodiment 15

(1) A coconut shell, ammonium chloride, and ammonium sulfate were mixed according to a ratio of 100:0.5:0.1, so as to obtain a mixture, a carbonization treatment was performed on the mixture at 900 °C for 15 h, and a precursor was obtained.
(2) The precursor was placed in a heat treatment furnace for a high-temperature treatment, a temperature for the high-temperature treatment was 2200 °C, a temperature-holding time was 6 h. A temperature-holding product after temperature holding was completed was subjected to acid pickling, an acid pickling product was dried, then a mixed gas of water vapor and nitrogen (a volume ratio being 100:0.4) was introduced, an activation treatment was performed for 14 h at 800 °C to obtain a carbon matrix with an average pore diameter being 1.7 nm, a volume proportion of micropores in the carbon matrix was 91%, and a total pore volume was 1.5 cm³/g.
(3) The carbon matrix was placed in a CVD device, then silane was introduced in the CVD device, a concentration of the silane was controlled at 37%, a temperature was heated to 480 °C, and a reaction was performed for 6 h to obtain a silicon deposition product.
(4) The silicon deposition product was placed in a CVD device, then acetylene was introduced in the CVD device, a concentration of the acetylene was controlled at 45%, a temperature was heated to 690 °C, and a reaction was performed for 3 h to obtain a coating product.
(5) The coating product was crushed, sieved, and graded to obtain an anode material.

### Embodiment 16

(1) A fruit shell and (NH₄)₂SO₄ were mixed according to a ratio of 100:2.3, then a carbonization treatment of a first step was performed, a temperature was 790 °C, and a time was 6 h.
(2) The precursor was placed in a heat treatment furnace for a high-temperature treatment, a temperature for the high-temperature treatment was 2400 °C, a temperature-holding time was 10 h. A temperature-holding product after temperature holding was completed was subjected to acid pickling, an acid pickling product was dried, then a mixed gas of water vapor and nitrogen (a volume ratio being 100:0.4) was introduced, an activation treatment was performed for 20 h at 800 °C to obtain a carbon matrix with an average pore diameter being 2.2 m, a volume proportion of micropores in the carbon matrix was 85%, and a total pore volume was 1.3 cm³/g.
(3) The carbon matrix was placed in a CVD device, then silane was introduced in the CVD device, a concentration of the silane was controlled at 17%, a temperature was heated to 560 °C, and a reaction was performed for 7 h to obtain a silicon deposition product.
(4) The silicon deposition product was placed in a CVD device, then propylene was introduced in the CVD device, a concentration of the propylene was controlled at 45%, a temperature was heated to 690 °C, and a reaction was performed for 4 h to obtain a coating product.
(5) The coating product was crushed, sieved, and graded to obtain an anode material.

### Embodiment 17

A difference between this embodiment and Embodiment 10 lied in that,
an acid pickling product was dried, then a mixed gas of water vapor and nitrogen (a volume ratio being 100:0.4) was introduced, a primary activation treatment was performed for 15 h at 800 °C, and a secondary activation treatment was performed for 15 h at 700 °C, so as to obtain a carbon matrix with an average pore diameter being 1.8 nm.

### Embodiment 18

A difference between this embodiment and Embodiment 10 lied in that,
Bamboo charcoal, urea, and thioalcohol were mixed according to a ratio of 100:1:6, so as to obtain a mixture.

### Embodiment 19

A difference between this embodiment and Embodiment 10 lied in that,
Bamboo charcoal, urea, and thioalcohol were mixed according to a ratio of 100:15:1, so as to obtain a mixture.

### Embodiment 20

(1) Bamboo charcoal and urea were mixed according to a ratio of 100:1, so as to obtain a mixture, a carbonization treatment was performed on the mixture at 850 °C for 5 h, and a precursor was obtained.
(2) The precursor was placed in a heat treatment furnace for a high-temperature treatment, a temperature for the high-temperature treatment was 1580 °C, a temperature-holding time was 10 h. A temperature-holding product after temperature holding was completed was subjected to acid pickling, an acid pickling product was dried and then introduced in a mixed gas of water vapor and nitrogen (a volume ratio being 100:0.4), an activation treatment was performed for 15 h at 800 °C to obtain a carbon matrix with an average pore diameter being 1.9 nm, a volume proportion of micropores in the carbon matrix was 90%, and a total pore volume was 0.91 cm³/g.
(3) The carbon matrix was placed in a CVD device, then silane was introduced in the CVD device, a concentration of the silane was controlled at 42%, a temperature was heated to 600 °C, and a reaction was performed for 4 h to obtain a silicon deposition product.
(4) The silicon deposition product and asphalt were mixed according to a mass ratio of 50:15 and placed in a high temperature box furnace after mixing, nitrogen was introduced, a heat treatment was performed at 700 °C, and the temperature was held for 2 h to obtain a coating product.
(5) The coating product was crushed, sieved, and graded to obtain an anode material.

### Embodiment 21

(1) Bamboo charcoal, urea, and thioalcohol were mixed according to a ratio of 100:1:0.5, so as to obtain a mixture, a carbonization treatment was performed on the mixture at 850 °C for 5 h, a temperature-holding product was subjected to acid pickling after temperature holding was completed, an acid pickling product was dried, then a mixed gas of water vapor and nitrogen (a volume ratio being 100:0.4) was introduced, and an activation treatment was performed for 15 h at 800 °C to obtain a precursor.
(2) The precursor was placed in a heat treatment furnace for a high-temperature treatment, a temperature for the high-temperature treatment was 1580 °C, a temperature-holding time was 10 h. A carbon matrix with an average pore diameter being 1.93 nm was obtained, a volume proportion of micropores in the carbon matrix was 88%, and a total pore volume was 0.89 cm³/g.
(3) The carbon matrix was placed in a CVD device, then silane was introduced in the CVD device, a concentration of the silane was controlled at 42%, a temperature was heated to 600 °C, and a reaction was performed for 4 h to obtain a silicon deposition product.
(4) The silicon deposition product and asphalt were mixed according to a mass ratio of 50:15 and placed in a high temperature box furnace after mixing, nitrogen was introduced, a heat treatment was performed at 700 °C, and the temperature was held for 2 h to obtain a coating product.
(5) The coating product was crushed, sieved, and graded to obtain an anode material.

### Comparative example 3

A difference between this comparative example and Embodiment 10 lied in that, the high-temperature treatment was not performed.

### Comparative example 4

A difference between this comparative example and Embodiment 10 lied in that, urea was not added to the mixture.

### Test method:

### (1) Method for testing specific surface area of anode material:

A specific surface area was measured by using a TriStar3000 specific surface area and pore diameter analyzer from Micromeritics, USA.

### (2) Method for testing total pore volume of anode material, carbon matrix, or anode material with silicon particles removed:

A test was performed by using an ASAP2460 device from Micromeritics, USA, and a pore volume V was calculated within a pore diameter range of 17 A-3000 A by using a BJH Desorption cumulative volume of pores model.

Micropore and mesopore analysis was performed by using Micromeretics ASAP 2460. At a liquid nitrogen temperature, an equilibrium amount of nitrogen adsorbed on a surface of an object was related to characteristics such as pore diameter, and in combination with the rule of change of an adsorption amount with relative pressure in an adsorption process, various models might be fit to calculate the pore diameter. A report generated by software used a Density Functional Theory (DFT) method to calculate pore diameter distribution, a total pore volume, and a pore volume within a certain range.

### (3) Method for testing pore diameters of pores of anode material, carbon matrix, or anode material with silicon particles removed:

A proper amount of sample particles was taken, the pore diameters and porosity of pores were measured under a Transmission Electron Microscope (TEM).

### (4) Method for testing particle size of silicon particles:

Nano silicon particles were observed by a field emission scanning electron microscopy or a transmission electron microscope, the particle sizes of 5-10 nano silicon particles were directly measured by a scale, and an average value of the particle sizes was taken as the final particle size of the nano silicon particles or an average particle size of the silicon particles.

### (5) Method for testing particle size of anode material:

A Malvern laser particle analyzer MS3000 was used, according to the principle that the scattered light intensity distribution of the particles generated in all directions was determined based on the sizes of the particles, large particles were at a small scattering angle, and small particles were at a large scattering angle, such that the particle size distribution in volume based distribution of the particles was obtained by using the scattered light intensity distribution of laser diffraction.

### (6) Testing for gas production value of anode material:

The anode material prepared in Embodiments 1-9 and Comparative examples 1-2 was added to 50 g of a styrene butadiene rubber solution to obtain a mixed solution; the mixed solution was packaged by using an aluminum plastic film, placed in a 2000 mL sealed container, and preserved at 45 °C; and the 6-day gas production amount of the anode material was obtained as M mL/g through testing.

### 7. Test for mass contents of oxygen atoms and nitrogen atoms in anode material:

A hydrogen oxygen nitrogen analyzer Eltra ONH2000 was used to measure the N and O elements in the material prepared in Embodiments 1-9 and Comparative examples 1-2, a test standard was ISO17053:2005.

### (8) Method for testing powder conductivity of anode material:

According to the national standard GBT30835-2014, a resistivity tester (ST-2255A of Suzhou Jingge Electronics) was used, 5 g of a powder sample was taken and pressed to 8000 kg+2 kg at a constant pressure by an electronic press machine for 15-25 s, the sample was placed between electrodes of a tester, a height of the sample was h(cm), voltages on two ends were U, a current was I, resistance was R(KΩ), an area after powder compacting was S=3.14cm², the powder conductivity was calculated according to a formula 5=h/(S*R)/1000, in S/m.

### (9) Test for electrochemical performance

The anode material obtained in the embodiments and comparative examples, carboxymethyl cellulose, and styrene butadiene rubber were respectively dissolved in N-Methyl-2-pyrrolidone according to a mass ratio of 94:1:5, a solid content was controlled at 50%, the mixture was coated on a copper foil current collector, vacuum drying was performed to prepare an anode plate; and a ternary cathode plate (NCM523), 1 mol/L lithium hexafluorophosphate LiPF₆/(Ethylene Carbonate (EC)+Dimethyl Carbonate (DMC)+Ethyl Methyl Carbonate (EMC))(v/v=1:1:1) electrolyte, a Celgard2400 separator, and a housing were used and assembled into a 18650 cylindrical single-cell battery using conventional production processes. A charging and discharging test of the cylindrical battery was performed on a LAND battery test system of Wuhan Jinnuo Electronics Co., Ltd., at a normal temperature condition, charging and discharging were performed at a constant current of 0.2 C, and charging and discharging voltages were limited at 2.75-4.2 V. A first reversible capacity, a first cycle charging capacity, and a first cycle discharging capacity were obtained. Initial coulombic efficiency=first cycle discharging capacity/first cycle charging capacity.

50 cycles were repeated, a discharging capacity was recorded as the remaining capacity of a lithium ion battery; and capacity retention rate=remaining capacity/initial capacity*100%.

### (10) Etching treatment:

A nitric acid solution with a concentration of 1 M was added in the anode material for soaking for 1 h; then an HF solution with a 20% mass fraction was added dropwise to the anode material, yellow smoke was produced, and the HF solution was repeated added dropwise for a plurality of times, until there no yellow smoke produced in the solution; and finally, the nitric acid solution with the concentration of 1 M was used again to eliminate residue, and then washing and drying were performed to obtain the anode material with the silicon particles removed. Alternatively, while stirring, 150 mL of HF solution with a mass fraction of 20% was dropwise added to 10 g of the anode material to generate SiF₄ and a H₂ gas and release heat, until there was no gas generated, the supernatant acid solution was removed through centrifugation, then 150 mL of the HF solution with the mass fraction of 20% was added to the anode material again, stirring was performed for 12 h, then the supernatant acid solution was removed again through centrifugation, and then the anode material was washed with pure water to neutral and dried, so as to obtain the anode material with the silicon particles removed, which is the carbon matrix.

### (11) Measurement for hydrogen production amount of anode material prepared in Embodiments 10-21 and Comparative examples 3-4:

The carboxymethyl cellulose was subjected to gluing according to a content of 1.4%, after uniform dispersion, 20 g of a glue solution was taken and mixed with 25 g of the anode material, and then the mixture was put in a 10 cm×10 cm aluminum plastic film bag for sealing. A volume of the aluminum plastic film bag was tested every 24 h in a measuring cylinder through a drainage method.

### (12) Method for testing mass content of carbon element in anode material:

A G4ICARUSHF infrared carbon sulfur analyzer from Bruker, Germany was used; a sample was burned at a high temperature in an oxygen-enriched state, and carbon and sulfur elements contained in the sample were respectively oxidized into carbon dioxide and sulfur dioxide; the generated gases entered an infrared detector with a carrier gas; and quantitative statistics was performed on changes in a carbon dioxide signal and sulfur dioxide signal, and contents of the carbon and sulfur elements might be calculated, respectively.

### (13) Method for testing mass content of silicon element in anode material:

An SA2-9-17TP box atmosphere furnace from Nanyang Xinyu Furnaces Co., Ltd. was used; burning was performed under an oxygen atmosphere; silicon and silicon monoxide in the sample were oxidized to form silica; and carbon was burned and discharged as carbon dioxide, and the silicon content was calculated through weighing.

### (14) Method for testing tap density of anode material:

A Better tap density meter was used, 100 g of a sample was weighed, and vibration was performed for 3000 times at 300 times/min to test a tap density.

### (15) Method for testing particle sizes D₁₀, D₅₀, and D₉₀ of anode material:

D₅₀ was tested by using a laser particle analyzer, and there was a symmetric distribution similar to a normal distribution. In a volume reference distribution, a cumulative 50% diameter was D₅₀, and so on, a cumulative 90% diameter was D₉₀, and a cumulative 10% diameter was D₁₀.

### (16) Method for testing mass contents of nitrogen, oxygen, and hydrogen elements in anode material prepared in Embodiments 10-21 and Comparative examples 3-4:

An ONH2000 oxygen nitrogen hydrogen element analyzer from Verder, Germany was used, the anode material was coated by a fluxing agent and molten in an inert atmosphere, the oxygen element contained in the anode material was reduced into carbon dioxide by carbon in a graphite crucible, the generated carbon dioxide entered the infrared detector with the carrier gas, and the content of oxygen element might be calculated by performing quantitative statistics on changes in the carbon dioxide signal. The sample is coated by the fluxing agent and molten in the inert atmosphere, the nitrogen and hydrogen contained in the sample are cracked to form respective stable nitrogen and hydrogen gases, the generated nitrogen and hydrogen gases enter a thermal conductivity detector with the carrier gas, and mass contents of the nitrogen and hydrogen may be respectively calculated by performing quantitative statistics on changes in heat of a thermal conductivity cell.

### (17) Test for powder resistivity of anode material:

An MCP-PD51 powder conductivity meter of Mitsubishi Chemical, Japan was used, and a system used a four-probe method to determine a method for sample volume resistivity. The resistance of a powder might be determined by using an instrument, and then the powder conductivity and resistivity of the powder were automatically calculated by a computer. The powder conductivity at five pressure points of 4, 8, 12, 16, 20 KN was tested respectively.

### (18) Test for compaction density of anode material:

A CARVER4350.22 powder compaction density tester from MYCRO, USA was used, a sample with specific mass m was placed in a die, a 1.0 T pressure was applied, the pressure was removed after being held for 30 S, a thickness was tested, and a compaction density was obtained through calculation.

Results of the performance test were as follows.

**Table 1 Performance parameters of anode material prepared in Embodiments 1-9 and Comparative examples 1-2**

| Sample | A (%) | B (%) | P (S/m) | (A+B)/ P | Specific surface area (m²/g) | Median particle size D₅₀ | Total pore volume of carbon matrix (cm³/g) | Average pore diameter of carbon matrix (nm) |
|---|---|---|---|---|---|---|---|---|
| Embodiment 1 | 1.0 | 0.45 | 0.8 | 1.81 | 2.1 | 8.9 | 0.90 | 1.8 |
| Embodiment 2 | 1.1 | 0.13 | 0.6 | 2.05 | 1.9 | 9.0 | 0.75 | 3.9 |
| Embodiment 3 | 1.0 | 0.09 | 1.2 | 0.9 | 3.0 | 9.2 | 0.94 | 1.7 |
| Embodiment 4 | 1.59 | 0.67 | 1.2 | 1.88 | 0.9 | 8.0 | 0.88 | 2.1 |
| Embodiment 5 | 0.5 | 0.24 | 0.7 | 1.06 | 4.2 | 6.8 | 0.96 | 2.1 |
| Embodiment 6 | 0.8 | 0.39 | 1.1 | 1.08 | 1.8 | 11.1 | 1.02 | 2.2 |
| Embodiment 7 | 1.0 | 0.15 | 1.5 | 0.76 | 3.3 | 8.2 | 0.6 | 5.8 |
| Embodiment 8 | 2.4 | 0.95 | 1.2 | 1.19 | 2.7 | 8.1 | 1.1 | 2.3 |
| Embodiment 9 | 2.1 | 0.95 | 1.05 | 2.9 | 1.6 | 9.0 | 1.3 | 2.9 |
| Comparative example 1 | 1.8 | 0.65 | 0.5 | 4.9 | 2.2 | 8.5 | 0.92 | 1.73 |
| Comparative example 2 | 0.6 | 0.05 | 0.20 | 3.25 | 1.5 | 12.3 | 0.84 | 1.8 |

**Table 2 Performance parameters of battery in Embodiments 1-9 and Comparative examples 1-2**

| Sample | Gas production value (mL/g) | First reversible capacity (mAh/g) | Initial coulombic efficiency (%) | Capacity retention rate (%) of 50 cycles |
|---|---|---|---|---|
| Embodiment 1 | 0.13 | 1938 | 93.1 | 93.1 |
| Embodiment 2 | 0.1 | 1895 | 92.8 | 93 |
| Embodiment 3 | 0.09 | 1901 | 92.9 | 92 |
| Embodiment 4 | 0.08 | 2034 | 92.3 | 92.4 |
| Embodiment 5 | 0.11 | 1810 | 92.8 | 91.8 |
| Embodiment 6 | 0.07 | 1917 | 92.5 | 92.0 |
| Embodiment 7 | 0.12 | 1838 | 90.1 | 88.5 |
| Embodiment 8 | 0.18 | 1911 | 92.1 | 91.2 |
| Embodiment 9 | 0.27 | 1917 | 88.2 | 90.7 |
| Comparative example 1 | 0.35 | 1901 | 87.2 | 86.4 |
| Comparative example 2 | 0.46 | 1905 | 86.4 | 85.1 |

According to data in Table 1 and Table 2, it might be learned that, the mass content A of the oxygen element and the mass content B of the nitrogen element in the anode material prepared in Embodiments 1-9 and the powder conductivity P of the anode material all met (A+B)/P≤3. The mixture of the carbon source and the modified substance was used for the primary carbonization treatment, such that the modified substance could be doped in the carbon matrix; then the secondary carbonization treatment was performed, and the temperature for the secondary carbonization treatment was controlled to be higher than the temperature for the primary carbonization treatment, such that a graphitization degree of the carbon matrix was increased by means of high temperatures, thereby improving the electronic conductivity of the carbon matrix itself. Furthermore, during the secondary carbonization treatment, more oxygen-containing or nitrogen-containing groups were volatilized, such that mass contents of nitrogen and oxygen in the carbon matrix could be controlled. The doping of small amounts of the oxygen element and the nitrogen element might provide lone pair electrons, and the lone pair electrons participated in a π-π conjugated system of the carbon matrix, such that a larger p-π conjugated system was formed, thereby improving the electronic conductivity of the anode material. Finally, the carbon matrix and the silicon particles were combined, such that the capacity of the anode material might be increased; the carbon matrix had the pores, facilitating the relieving of the volume expansion of the silicon particles in the anode material during cycling, such that the structure stability was maintained, and the collapse of a material structure caused by the volume expansion of the anode material during lithium intercalation/lithium deintercalation was reduced. The pores in the carbon matrix could also adsorb a small amount of gas, such that the gas production phenomenon of the anode material could also be further reduced, thereby improving the cycling performance of the anode material.

According to test data of Embodiments 1-4, it might be learned that, as the mass content of the nitrogen element reduced, the first reversible capacity of the anode material also tended to reduce. Preferably, the mass content of the nitrogen element was 0.1%-0.5%.

According to test data of Embodiment 1 and Embodiment 7 in Table 1 and Table 2, it might be learned that, the secondary carbonization temperature in Embodiment 7 was too high, and the too high carbonization temperature increased graphitization degree of the carbon matrix. Although the powder conductivity of the anode material was improved, the pores of partial carbon matrix collapsed due to excessive carbonization temperature, causing more silicon to deposit on the surface of the carbon matrix subsequently rather than in the pores, and the silicon content in the anode material also reduced. Since partial silicon was deposited on the surface of the carbon matrix, leading to exacerbated volume expansion of the anode material, and the initial coulombic efficiency and cycling performance of the anode material were slightly reduced compared to Embodiment 1.

According to test data of Embodiment 1 and Comparative example 1 in Table 1 and Table 2, it might be learned that, the mass content A of the oxygen element and the mass content B of the nitrogen element in the anode material in Comparative example 1 and the powder conductivity P of the anode material did not meet (A+B)/P ≤ 3. During the preparation of the anode material in Comparative example 1, the secondary carbonization treatment was not performed, more oxygen- or nitrogen-containing groups remained in the carbon matrix, the mass contents of nitrogen and oxygen in the anode material greatly increased, the carbon matrix was not subjected to the secondary carbonization treatment, the graphitization degree was reduced, and the conductivity of the carbon matrix itself was greatly reduced. Even though the doping of small amounts of nitrogen element and oxygen element of the oxygen-containing groups or nitrogen-containing groups might provide lone pair electrons, it was difficult to significantly improve the electronic conductivity of the anode material, thus leading to a reduction in the capacity fading, the initial coulombic efficiency, and cycling performance of the anode material.

According to test data of Embodiment 1 and Comparative example 2 in Table 1 and Table 2, it might be learned that, the mass content A of the oxygen element and the mass content B of the nitrogen element in the anode material in Comparative example 2 and the powder conductivity P of the anode material did not meet (A+B)/P≤3. During the preparation of the anode material of Comparative example 2, the modified substance was not added, there were no sufficient oxygen-containing groups or nitrogen-containing groups to cooperate with the carbon matrix so as to form carbon-carbon conjugation. Furthermore, the secondary carbonization temperature was lower than the primary carbonization temperature, and the conductivity of the carbon matrix was greatly reduced, leading to a significant reduction in the electronic conductivity of the anode material, and thus causing the capacity fading, the initial coulombic efficiency, and cycling performance of the anode material to reduce.

**Table 3 Performance parameter table of anode material of Embodiments 10-21 and Comparative examples 3-4**

| Sample | Oxygen content A (%) | Nitrogen content B (%) | Sulfur content S (ppm) | Powder conductivity P (S/cm) | (A+B)/P |
|---|---|---|---|---|---|
| Embodiment 10 | 1.3 | 0.4 | 15 | 0.9 | 1.89 |
| Embodiment 11 | 1.11 | 0.35 | 17 | 0.85 | 1.72 |
| Embodiment 12 | 1.2 | 0.38 | 16 | 0.95 | 1.66 |
| Embodiment 13 | 0.5 | 0.1 | 6 | 18 | 0.03 |
| Embodiment 14 | 1.4 | 0.29 | 15 | 0.8 | 2.11 |
| Embodiment 15 | 0.9 | 0.1 | 10 | 1.1 | 0.91 |
| Embodiment 16 | 1.2 | 0.09 | 16 | 1.1 | 1.17 |
| Embodiment 17 | 1.8 | 0.33 | 17 | 1.2 | 1.78 |
| Embodiment 18 | 1.14 | 0.33 | 20 | 0.99 | 1.48 |
| Embodiment 19 | 2.9 | 3.2 | 15 | 2.2 | 2.77 |
| Embodiment 20 | 1.25 | 0.38 | 0 | 0.88 | 1.85 |
| Embodiment 21 | 1.2 | 0.8 | 29 | 1.1 | 1.82 |
| Comparative example 3 | 1.9 | 1.75 | 30 | 0.99 | 3.69 |
| Comparative example 4 | 0.5 | 0.05 | 23 | 0.45 | 1.2 |

**Table 4 Performance parameter table of anode material of Embodiments 10-21 and Comparative examples 3-4**

| Sample | Volume proportion of mesopores (%) | Total pore volume (cm³/g) | D₅₀ (µm) | (D₉₀-D₁₀)/D₅₀ | Specific surface area (m²/g) |
|---|---|---|---|---|---|
| Embodiment 10 | 88.5 | 0.058 | 5.6 | 3.1 | 10.2 |
| Embodiment 11 | 89.1 | 0.082 | 7.1 | 3.6 | 10.0 |
| Embodiment 12 | 89.6 | 0.067 | 8.2 | 4.4 | 8.7 |
| Embodiment 13 | 90.3 | 0.069 | 10 | 4.1 | 19.9 |
| Embodiment 14 | 91.2 | 0.087 | 6.0 | 3.8 | 15.4 |
| Embodiment 15 | 90.8 | 0.096 | 9.8 | 2.4 | 13.7 |
| Embodiment 16 | 88.1 | 0.075 | 7.5 | 1.2 | 8.8 |
| Embodiment 17 | 87.9 | 0.026 | 7.2 | 2.8 | 6.5 |
| Embodiment 18 | 91.6 | 0.054 | 6.1 | 2.5 | 14.8 |
| Embodiment 19 | 92.2 | 0.027 | 10.2 | 3.4 | 14.9 |
| Embodiment 20 | 90.2 | 0.26 | 8.1 | 2.6 | 13.4 |
| Embodiment 21 | 80.2 | 0.066 | 6.0 | 3.0 | 12.1 |
| Comparative example 3 | 89.7 | 0.05 | 6.8 | 2.9 | 10.6 |
| Comparative example 4 | 88.4 | 0.21 | 5.9 | 2.5 | 11.2 |

**Table 5 Performance parameter table of battery in Embodiments 10-21 and Comparative examples 3-4**

| Sample | Hydrogen production value (ml/g) | First reversible capacity (mAh/g) | Initial coulombic efficiency (%) | Capacity retention rates of 50 cycles (%) |
|---|---|---|---|---|
| Embodiment 10 | 0.09 | 1908 | 93.1 | 92.7 |
| Embodiment 11 | 0.06 | 1923 | 92.6 | 92.4 |
| Embodiment 12 | 0.08 | 1897 | 92.8 | 92.6 |
| Embodiment 13 | 0.15 | 1905 | 92.4 | 91.5 |
| Embodiment 14 | 0.10 | 1899 | 92.8 | 93 |
| Embodiment 15 | 0.12 | 1904 | 92.9 | 92.6 |
| Embodiment 16 | 0.08 | 2008 | 92.5 | 92.5 |
| Embodiment 17 | 0.07 | 1911 | 92.9 | 92.2 |
| Embodiment 18 | 0.04 | 1907 | 92.1 | 91.1 |
| Embodiment 19 | 0.52 | 1915 | 92.9 | 91.4 |
| Embodiment 20 | 0.19 | 1894 | 92.0 | 91.0 |
| Embodiment 21 | 0.15 | 1898 | 92.4 | 91.8 |
| Comparative example 3 | 0.81 | 1914 | 90.8 | 90.9 |
| Comparative example 4 | 0.05 | 1855 | 89.8 | 90.4 |

According to data in Table 3 to Table 5, it might be learned that, for the anode material prepared in Embodiments 10-17, the anode material contained the oxygen element and the nitrogen element, small amounts of the nitrogen element and the oxygen element might provide lone pair electrons, and the lone pair electrons participated in a π-π conjugated system of the carbon matrix, such that a larger p-π conjugated system was formed, thereby improving the electronic conductivity of the anode material. Further, the anode material was also doped with the sulfur element while being doped with nitrogen and oxygen, and the sulfur element of the anode material was 0 < S≤20 ppm. Since the sulfur element had a large atomic radius, a C-S bond having lithium storage activity might be formed with the carbon element in the anode material, such that a spacing between carbon layers of the carbon matrix after the nitrogen and oxygen elements were doped might further be expanded, thereby achieving better conductivity of the carbon matrix. Furthermore, the sulfur element might bond to the oxygen element to form an inactive S-O bond, thereby reducing the gas production problem caused by reactions between an electrode plate prepared by the anode material and electrolyte. Furthermore, after the sulfur element was doped, a relationship among the content of the oxygen element, the content of the nitrogen element, and the powder conductivity met (A+B)/P≤3, that is, the mass content A of the oxygen element, the mass content B of the nitrogen element, and the powder conductivity P were balanced, promoting nitrogen oxygen doping to relieve the problem of increased gas production of the electrolyte due to excessive nitrogen oxygen content while improving the powder conductivity of the anode material, such that the anode material had excellent conductivity and cycling performance.

Further, during the preparation of the anode material, through the high-temperature treatment, that is, the steps such as the secondary carbonization treatment, in an aspect, the high-temperature treatment improved the graphitization degree of the carbon material, such that more continuous conductive networks were formed to improve the conductivity of the anode material, and in another aspect, at a high temperature, more O, N, and S groups were volatilized, such that the contents of the nitrogen, oxygen, and sulfur elements might be effectively controlled, and the problem of gas production of the anode material was reduced while maintaining high conductivity.

According to test results of Embodiment 10 and Embodiment 18, it might be learned that, the sulfur element was overdoped. The sulfur element might bond to the oxygen element to form the inactive S-O bond, and a gas production value of the anode material further decreased. However, since the spacing between the carbon layers of the carbon matrix after the sulfur element was doped was further expanded, the structure stability of the carbon matrix was slightly reduced, and a cycle capacity retention rate of the anode material was slightly reduced compared to Embodiment 10.

According to test results of Embodiment 10 and Embodiment 19, it might be learned that, the nitrogen element and the oxygen element were overdoped, the power conductivity of the anode material was improved, and the initial coulombic efficiency of the anode material was improved. However, due to the decrease of the inactive S-O bond that the sulfur element can form with the oxygen element, the gas production value of the anode material in Embodiment 10 was increased.

According to test results of Embodiment 10 and Embodiment 20, it might be learned that, the thioalcohol was not added during the preparation in Embodiment 20. The content of the sulfur element in the anode material was 0, and the initial coulombic efficiency of the anode material was equivalent to that in Embodiment 10. However, since through the preparation method, the total pore volume and specific surface area of the anode material were too large, the gas production value of the anode material was significantly increased compared to Embodiment 10, resulting in a reduction in the cycling performance of the anode material.

According to test results of Embodiment 10 and Embodiment 21, it might be learned that, in Embodiment 21, since activation treatment was performed first and then the high-temperature treatment (i.e., secondary carbonization treatment) was performed during preparation, the high-temperature treatment caused the collapse of the pores, a pore volume reduced, and deposition was non-uniform, leading to an increase in the gas production value of the anode material, and thus resulting in a reduction in the cycling performance.

According to test results of Embodiment 10 and Comparative example 3, it might be learned that, in the anode material that was not subjected to the high-temperature treatment in Comparative example 3, the doping amount of the sulfur element significantly exceeded an ideal range, and the doping amount of the nitrogen element significantly increased compared to Embodiment 10, such that a balance among the mass content A of the oxygen element, the mass content B of the nitrogen element, and the powder conductivity P was broken, and the gas production value of the anode material significantly increased. Since the doping of excessive sulfur element affected the structure stability of the carbon matrix, the cycling performance of the anode material was reduced.

According to test results of Embodiment 10 and Comparative example 4, it might be learned that, nitrogen oxygen doping was not performed during preparation in Comparative example 4, the powder conductivity of the anode material was reduced, and the initial coulombic efficiency of the anode material was significantly reduced.

The applicant declared that the present disclosure illustrated the detailed process devices and process flows of the present disclosure by the above embodiments, but the present disclosure was not limited to the above detailed process devices and process flows, i.e., it did not mean that the present disclosure had to rely on the above detailed process devices and process flows in order to be implemented. **It** should be clear to those skilled in the art that any improvements to the present disclosure, the equivalent substitution of raw materials of a product of the present disclosure and the addition of auxiliary ingredients, the selection of specific methods, etc., fallen within the scope of protection and disclosure of the present disclosure.

## Claims

1. An anode material, comprising an active substance, wherein the active substance comprises a carbon matrix and a silicon material;
the anode material comprises an oxygen element and a nitrogen element, a mass content of the oxygen element is A%, and a mass content of the nitrogen element is B%; and
a powder conductivity of the anode material is P S/m, and meets the following relationship: (A+B)/P≤3.

2. The anode material according to claim 1, wherein the anode material has at least one of the following technical features:
(1) the silicon material comprises silicon particles;
(2) the silicon material comprises the silicon particles and silicon oxide layers located on surfaces of the silicon particles, wherein the silicon oxide layer comprises a silicon oxide, and a general formula of the silicon oxide is SiOₓ; or
(3) the silicon material comprises the silicon particles and the silicon oxide layers located on surfaces of the silicon particles, wherein based on the mass of a silicon material being 100%, a mass percentage content of an oxygen element in the silicon material is 1%-18%.

3. The anode material according to claim 2, wherein the carbon matrix has pores, and at least partial silicon particles are distributed in the pores of the carbon matrix.

4. The anode material according to any one of claims 1 to 3, further comprising a sulfur element, wherein a content of the sulfur element in the anode material is S ppm, wherein 0<S≤20 ppm.

5. The anode material according to any one of claims 1 to 4, wherein the anode material has at least one of the following technical features:
(1) in the anode material, the mass content of the oxygen element is A%, 0<A≤3; or
(2) in the anode material, the mass content of the nitrogen element is B%, 0<B≤3.

6. The anode material according to any one of claims 2 to 5, wherein the anode material has at least one of the following technical features:
(1) the silicon particles comprise at least one of elemental silicon, silicon oxides, silicon alloys, or silicon-carbon complexes;
(2) an average particle size of the silicon particles is 0.1 nm-500 nm; or
(3) a mass content of silicon element in the silicon particles is ≥99%.

7. The anode material according to any one of claims 1 to 6, wherein the anode material has at least one of the following technical features:
(1) a median particle size D₅₀ of the anode material is ≤10 µm;
(2) a specific surface area of the anode material is ≤5 m²/g;
(3) a 6-day gas production amount of the anode material is M mL/g, wherein M≤0.2; or
(4) the powder conductivity of the anode material is P S/m, wherein P≥0.01 S/m.

8. The anode material according to any one of claims 1 to 7, wherein the anode material has pores, and the anode material has at least one of the following technical features:
(1) the pores of the anode material comprise mesopores, wherein a volume proportion of the mesopores in the anode material in a total pore volume of the anode material is 87%-97%;
(2) the pores of the anode material further comprise at least one of micropores or macropores;
(3) the pores of the anode material further comprise at least one of the micropores or the macropores, a volume proportion of the micropores in the total pore volume of the anode material is ≤20%, and a volume proportion of the macropores in the total pore volume of the anode material is ≤10%;
(4) the pores of the anode material further comprise at least one of the micropores or the macropores, the volume proportion of the micropores in the total pore volume of the anode material is ≤5%, and the volume proportion of the macropores in the total pore volume of the anode material is ≤10%;
(5) an average pore diameter of the pores in the anode material is 0.5 nm-20 nm;
(6) the total pore volume of the anode material is 0.001 cm³/g-0.1 cm³/g; or
(7) the powder conductivity of the anode material is 10⁻¹ S/cm-10⁴ S/cm.

9. The anode material according to any one of claims 2 to 8, wherein the anode material has at least one of the following technical features:
(1) the pores in the anode material with the silicon particles removed comprise the micropores, a volume proportion of the pores in the anode material with the silicon particles removed in a total pore volume of the anode material with the silicon particles removed is ≥80%;
(2) an average pore diameter of the anode material with the silicon particles removed is ≤5 nm;
(3) the total pore volume of the anode material with the silicon particles removed is 0.2 cm³/g-2 cm³/g; or
(4) a porosity of the anode material with the silicon particles removed is 40%-60%.

10. The anode material according to any one of claims 1 to 9, wherein the anode material has at least one of the following technical features:
(1) a particle size of the anode material meets: 2 µm≤D₅₀≤20 µm, and 0.9≤(D₉₀-D₁₀)/D₅₀≤5;
(3) a specific surface area of the anode material is 1 m²/g-10 m²/g;
(4) a compaction density of the anode material is 0.80 cm³/g-1.30 cm³/g; or
(5) a tap density of the anode material is 0.50 cm³/g-1.50 cm³/g.

11. The anode material according to any one of claims 1 to 10, wherein the anode material has at least one of the following technical features:
(1) a mass content of carbon element in the anode material is 40%-60%; or
(2) a mass content of silicon element in the anode material is 35%-55%.

12. The anode material according to any one of claims 1 to 11, wherein the carbon matrix has at least one of the following technical features:
(1) the carbon matrix comprises at least one of hard carbon, soft carbon, graphite, mesocarbon microbeads, activated carbon, porous carbon, mesoporous carbon, or carbon gel;
(2) at least one of a surface of the carbon matrix, a carbon-carbon skeleton, a gap between carbon layers, or a lattice defect comprises a functional group, and the functional group comprises at least one of the oxygen element, the nitrogen element, or the sulfur element; or
(3) the surface and/or pores of the carbon matrix have the functional group, and the functional group comprises at least one of the oxygen element, the nitrogen element, or the sulfur element, wherein the functional group comprises at least one of hydroxyl, carboxyl, carbonyl, an ester group, a cyclic lactone group, amino, sulfhydryl, sulfate, sulfite, thioether, or a sulfonic acid group.

13. The anode material according to any one of claims 2 to 12, wherein the silicon particle has at least one of the following technical features:
(1) the silicon particle comprises at least one of amorphous silicon, crystalline silicon, silicon oxide, silicon alloy, or a complex of the crystalline silicon and the amorphous silicon; or
(2) the shape of the silicon particle comprises at least one of a dot shape, a spherical shape, an ellipsoidal shape, or a flaky shape.

14. The anode material according to any one of claims 1 to 13, wherein at least partial surface of the anode material has a coating layer, and a material of the coating layer comprises at least one of a carbon material, titanium nitride, boron nitride, silicon nitride, silicon oxide, magnesium oxide, aluminum oxide, silicon carbide, or polyaniline.

15. A battery, comprising the anode material according to any one of claims 1 to 14.
